# EUROPEAN PATENT APPLICATION

(11) **EP 4 685 960 A1**
(43) Date of publication of application: **28.01.2026**
(21) Application number: 24796912.4
(22) Date of filing: 18.04.2024
(51) Int. Cl.: H01M 50/249, H01M 50/236, H01M 50/242

(54) **BATTERY CASE**

(30) Priority: 26.04.2023 JP 2023072578
(71) Applicant: JFE STEEL CORPORATION, Tokyo 100-0011 (JP)
(72) Inventor: TOKITA, Yuichi, Tokyo 100-0011 (JP); AGEBA, Ryo, Tokyo 100-0011 (JP)
(74) Representative: Hoffmann Eitle
(86) International application number: PCT/JP2024/015417
(87) International publication number: WO 2024/225159

(57) **Abstract**

A battery case 1 of the present invention includes an inner cross member 3 extending in the vehicle width direction extend over a pair of side wall portions 12 and 13 in a main body 2. The inner cross member 3 includes a top plate section, a pair of vertical wall portions, and a pair of flange sections, the pair of vertical wall portions includes a front side vertical wall portion and a rear side vertical wall portion facing each other in the vehicle front-rear direction, and a ridgeline portion extending in the vehicle width direction is formed in at least one of the front vertical wall and the rear vertical wall.

## Description

### Field

The present invention relates to a battery case.

### Background

An electric vehicle mounted with a motor for traveling is mounted with a battery, which supplies electric power to the motor, in a state in which the battery is housed in a battery case. When the capacity of the battery is increased in order to increase a cruising distance of the electric vehicle, the size of the battery case increases accordingly. Thus, in order to ensure a wide vehicle interior, many electric vehicles mounted with battery cases below floor panels of vehicle body structures.

An electric vehicle includes a vehicle body component and a structure for protecting a battery at the time of collision or the like and is configured to be able to protect the battery at the time of deformation of a vehicle body due to collision.

For example, Patent Literature 1 discloses, in an electric vehicle mounted with a battery case including a bathtub-shaped tray that houses the battery, a structure in which a frame is disposed so as to surround front, rear, left, and right of the tray as a vehicle body component for protecting a battery at the time of collision.

Patent Literature 2 discloses a battery case lower tray including a plurality of reinforcements and a plurality of reinforcing members that couple the reinforcements adjacent to one another. In the configuration described in Patent Literature 2, when a pressing force acts on regions among the reinforcements adjacent to one another, the pressing force is dispersed and transmitted to the plurality of reinforcements via the reinforcing members. Therefore, the pressing force transmitted to one reinforcement is reduced. Accordingly, since the reinforcements are less easily buckled and deformed, deformation of a tray main body can be suppressed.

Patent Literature 3 discloses a frame-shaped frame disposed to surround front, rear, left, and right of a battery. The frame-shaped frame includes a pair of longitudinal ribs extending in the vehicle front-rear direction and a cross member supported by the pair of longitudinal ribs and extending in the vehicle width direction. The cross member includes a first plate member and a second plate member that are disposed to face each other in the vehicle front-rear direction and joined to each other. The length in the vehicle width direction of the cross member can be adjusted by adjusting an amount of overlap in the vehicle width direction between the first plate member and the second plate member and joining the first plate member and the second plate member.

Patent Literature 4 discloses a beam assembly that can be used as a component of a battery tray. The beam assembly has structure in which a plurality of elongated beams are joined. The elongated beam includes an elongated tubular portion and a protruding portion protruding from the tubular portion to the outer side and has a P-shaped cross section. The beam assembly is configured by a first beam and a second beam cut from a single elongated beam. The beam assembly has structure in which the first and second beams are aligned in parallel and rotated approximately 180 degrees axially along the longitudinal direction to attach one protruding portion to the other tubular portion.

Patent Literature 5 discloses a battery case support structure that supports and protects a battery case with a vehicle frame member. A vehicle frame member includes a pair of side frames disposed on the vehicle width direction outer side of the battery case and a cross member disposed below the battery case and has structure in which the side frames and the cross member are integrated. The side frame is substantially B-shaped in a cross sectional shape orthogonal to an extending direction. The side frame includes one vertical wall portion and two protrusions protruding to the vehicle width direction inner side from the vertical wall portion and is configured by one member.

### Citation List

### Patent Literature

Patent Literature 1: JP 2021 041783 A
Patent Literature 2: JP 2020 053132 A
Patent Literature 3: JP 2023 016511 A
Patent Literature 4: JP 2023-515495 W
Patent Literature 5: JP 2020-125023 A

### Summary

### Technical Problem

In the configuration described in Patent Literature 1, since the frame-shaped frame is disposed to surround the entire periphery of the tray, strength can be ensured but many frame members are necessary. For that reason, an area in which the battery can be housed is limited with respect to the surface area of the tray. Since the frame is made of metal, weight increases by the weight of the frame and energy efficiency decreases.

In the configuration described in Patent Literature 2, it is possible to prevent deformation of the tray main body without any problem in strength if the tray main body is made of metal. However, an increase in weight is significant when the tray main body is made of iron and, if light metal is used for a reduction in weight, cost increases. When the tray main body is made of resin, a reduction in weight is possible but, on the other hand, since strength is low, it is necessary to increase resin thickness or reinforce the tray main body to prevent deformation of the tray main body. There is a problem of an increase in weight and an increase in manufacturing cost.

In the configuration described in Patent Literature 3, since each of the first plate member and the second plate member configuring the cross member is disposed to be supported by only one of the pair of longitudinal ribs, there is a problem that the rigidity of the cross member against a collision load from the vehicle width direction is low and deformation (bending deformation) easily occurs in the cross member. Although a configuration in which both end portions of the cross member, which are non-overlapping portions between the first plate member and the second plate member, and the center of the cross member are reinforced against the deformation of the cross member is disclosed, the configuration is insufficient to improve load-bearing performance against a load acting in the vehicle width direction at the time of side surface collision.

Patent Literature 4 only discloses the beam assembly. If the beam assembly is joined as a component of the battery tray in a poor manner, the beam assembly is likely to be unable to exert predetermined performance.

Patent Literature 5 discloses the structure in which, for the vehicle frame member in which the pair of side frames are connected by the cross members, the battery case is only placed and fixed on the upper surface of the vehicle frame member and is not a structure where collision characteristics are improved by the battery case and the vehicle frame. For that reason, when an impact from a side is received, the substantially B-shaped cross-sectional shape of the side frame easily collapses and is bent and deformed and the deformed side frame intrudes into the inner side of the battery case. Therefore, the vehicle frame member cannot have sufficient load-bearing performance.

The present invention has been made in order to solve the problems described above, and an object of the present invention is to provide a battery case having sufficient rigidity and strength without requiring a significant increase in weight and manufacturing cost. Solution to Problem

According to the present invention, a battery case that is mounted below a floor of a vehicle body and houses a battery, includes: a main body including a bottomed frame body including a pair of side wall portions facing each other in a vehicle width direction in a state of being mounted on the vehicle body; an inner cross member extending in the vehicle width direction to extend over the pair of side wall portions in the main body to reinforce the main body; and a side frame that extends in a vehicle front-rear direction outside the main body and is joined to outer surfaces of the pair of side wall portions to reinforce the main body. Further, the inner cross member includes: a top plate section; a pair of vertical wall portions formed in series from the top plate section via an upper bent section; and a pair of flange sections formed in series from the vertical wall portion via a lower bent section, the pair of vertical wall portions includes: a front side vertical wall portion formed continuously from the top plate section to a front side in the vehicle front-rear direction; and a rear side vertical wall portion that faces the front side vertical wall portion in the vehicle front-rear direction and is formed continuously from the top plate section to a rear side in the vehicle front-rear direction, and a ridgeline portion extending in the vehicle width direction is formed in at least one of the front side vertical wall portion and the rear side vertical wall portion.

In the battery case according to the present invention, the ridgeline portion is formed over an entire length in a longitudinal direction of the inner cross member.

In the battery case according to the present invention, in at least one of the front side vertical wall portion and the rear side vertical wall portion, a recess recessed toward another vertical wall facing the one vertical wall portion, and the recess is formed to include a plurality of the ridgeline portions and extends in the vehicle width direction.

In the battery case according to the present invention, the recess includes: a front side recess formed in the front side vertical wall portion; a rear side recess formed in the rear side vertical wall portion, and the front side recess and the rear side recess are joined in portions facing each other in the vehicle front-rear direction.

In the battery case according to the present invention, the flange section is joined to a bottom of the main body.

In the battery case according to the present invention, the inner cross member is joined in a state in which an end portion in the vehicle width direction is in contact along the side wall portion.

In the battery case according to the present invention, in the inner cross member, both of the front side vertical wall portion and the rear side vertical wall portion are connected to the side wall portion.

The battery case according to the present invention includes a center frame that extends in the vehicle front-rear direction in the main body and is provided to extend over a front wall portion and a rear wall portion of the main body and divides an inside of the main body in the vehicle width direction. Further, one end portion in the vehicle width direction of the inner cross member is joined to the side wall portion and another end portion in the vehicle width direction of the inner cross member is joined to the center frame.

In the battery case according to the present invention, the side frame is a structure made of steel in which a steel sheet is mountain folded and/or valley folded and has a plurality of cross sections extending in the vehicle width direction, and a mountain folded portion and/or a valley folded portion in the side frame forms a plurality of bent portions extending in the vehicle front-rear direction.

In the battery case according to the present invention, the side frame includes a side surface portion provided continuously to the cross section via the bent portion, and the side surface portion is a portion joined to an outer surface of the side wall portion.

In the battery case according to the present invention, an interval between the cross sections in a vehicle height direction is equal to or smaller than half of a depth of a bottom of the main body.

In the battery case according to the present invention, the side frame includes: a first member having a W-shaped cross section spreading toward an outer side or an inner side in the vehicle width direction; and a second member having a flat shape joined to the outer side or the inner side in the vehicle width direction of the first member, and a joining portion of the first member and the second member is joined in a butted state.

In the battery case according to the present invention, the side frame includes: a first member having a hat cross-sectional shape spreading toward an inside in the vehicle width direction; and a second member having a U-shaped cross section joined to an outer side in the vehicle width direction of the first member, and a relationship between a curvature radius R of a punch shoulder R portion of the second member and a plate thickness t of the second member satisfies R/t ≤ 3.0.

In the battery case according to the present invention, the side frame is configured by a structure having a figure eight-shaped cross section in which two rectangles are overlapped in a vehicle height direction.

In the battery case according to the present invention, an uneven shape is formed at a mounting portion of the battery in a bottom of the main body.

The battery case according to the present invention, includes a plate member that closes an opening in a vehicle height direction of the uneven shape. Further, a space segmented by the uneven shape and the plate member is used as a flow path for a coolant for cooling the battery.

In the battery case according to the present invention, the inner cross member is made of a steel sheet having a yield strength of 500 MPa class or more, and the side frame is made of a steel sheet having tensile strength of 1180 MPa class or more.

### Advantageous Effects of Invention

According to the present invention, it is possible to achieve a structure of a battery case having rigidity and strength higher than those in the related art without requiring a significant increase in weight and manufacturing cost.

### Brief Description of Drawings

FIG. 1: FIG. 1 is an exploded view for explaining an overall configuration of a battery case in an embodiment.
FIG. 2: FIG. 2 is a diagram illustrating a state in which an inner cross member, a side frame, and a fixing member are integrated with a tray.
FIG. 3: FIG. 3 is a perspective view for explaining a structure of the inner cross member.
FIG. 4: FIG. 4 is a diagram illustrating the inner cross member as viewed in the vehicle width direction.
FIG. 5: FIG. 5 is a diagram for explaining a connection state between the inner cross member and the bottom of the tray.
FIG. 6: FIG. 6 is a diagram for explaining a connection state between the inner cross member and a side wall portion of the tray.
FIG. 7: FIG. 7 is a perspective view for explaining a structure of the side frame.
FIG. 8: FIG. 8 is a cross-sectional view illustrating a cross-sectional shape of the side frame.
FIG. 9: FIG. 9 is a diagram for explaining a positional relationship between the side frame and the main body.
FIG. 10: FIG. 10 is a diagram for explaining a state in which the fixing member is fixed to the side wall portion of the tray.
FIG. 11: FIG. 11 is a diagram for explaining a state in which the fixing member is fixed to the bottom of the tray.
FIG. 12: FIG. 12 is a cross-sectional view for explaining a state in which the battery case is fixed to a side sill.
FIG. 13: FIG. 13 is a cross-sectional view for explaining a state in which the side frame is fixed to the fixing member.
FIG. 14: FIG. 14 is a cross-sectional view for explaining a state in which the fixing member is fixed to the bottom of the tray.
FIG. 15: FIG. 15(a) is a schematic diagram for explaining the shape of an inner cross member in a first modification, FIG. 15(b) is a schematic diagram for explaining the shape of an inner cross member in a second modification, FIG. 15(c) is a schematic diagram for explaining the shape of an inner cross member in a third modification, and FIG. 15(d) is a schematic diagram for explaining the shape of an inner cross member in a fourth modification.
FIG. 16: FIG. 16 is a schematic diagram for explaining a state in which the inner cross member and the side wall portion of the tray are joined by a welded portion.
FIG. 17: FIG. 17 is a diagram for explaining the shape of an inner cross member set as a target of a CAE analysis.
FIG. 18: FIG. 18 is a diagram for explaining a load acting on the inner cross member in the CAE analysis.
FIG. 19: FIG. 19 is a diagram illustrating a correspondence relationship between a maximum load of a load-stroke curve obtained by the CAE analysis of the inner cross member and the number of ridgeline portions formed in a vertical wall portion of the inner cross member.
FIG. 20: FIG. 20 is a diagram for explaining a side frame in the first modification.
FIG. 21: FIG. 21 is a diagram for explaining a side frame in the second modification.
FIG. 22: FIG. 22 is a diagram for explaining a side frame in the third modification.
FIG. 23: FIG. 23 is a diagram for explaining a load acting on the side frame at the time of side surface collision used in the CAE analysis.
FIG. 24: FIG. 24 is a diagram schematically illustrating a state in which the side frame is deformed at the time of pole side surface collision in the CAE analysis.
FIG. 25: FIG. 25 is a diagram for explaining a side frame in a comparative example.
FIG. 26: FIG. 26 is a diagram illustrating a maximum load (proof stress) of a load-stroke curve obtained by the CAE analysis.
FIG. 27: FIG. 27 is a diagram illustrating a relationship between the load-bearing performance of the side frame at the time of side surface collision obtained by the CAE analysis illustrated in FIGS. 23 and 24 and a curvature radius of a punch shoulder R portion of a second member having a U-shaped cross section and the plate thickness of the second member. A graph illustrating a relationship between the curvature radius and the thickness and a relationship with the presence or absence of welding.
FIG. 28: FIG. 28 is a diagram for explaining the structure of a battery case including a center frame.
FIG. 29: FIG. 29 is a cross-sectional view for explaining a structure in which a coolant flow path is formed at the bottom of a tray.
FIG. 30: FIG. 30 is a diagram for explaining a structure in which a panel is provided on the upper surface of the bottom of the tray.
FIG. 31: FIG. 31 is a cross-sectional view for explaining an evaluation distance that is a minimum distance between a side wall portion and the vehicle width direction end portion of a battery.
FIG. 32: FIG. 32 is a diagram illustrating an invention example set as a target of the CAE analysis target and a comparative example.
FIG. 33: FIG. 33 is a graph illustrating CAE analysis results in the invention example and the comparative example.
FIG. 34: FIG. 34(a) is a diagram illustrating a CAE analysis result of an invention example 3 and FIG. 34(b) is a diagram illustrating a CAE analysis result of an invention example 4.
FIG. 35: FIG. 35(a) is a diagram illustrating a CAE analysis result of a comparative example 1 and FIG. 35(b) is a diagram illustrating a CAE analysis result of a comparative example 4.
FIG. 36: FIG. 36(a) is a diagram illustrating an inner cross member of a type a, FIG. 36(b) is a diagram illustrating an inner cross member of a type b, FIG. 36(c) is a diagram illustrating an inner cross member of a type c, and FIG. 36(d) is a diagram illustrating an inner cross member of a type d.
FIG. 37: FIG. 37 is a diagram illustrating a correspondence relationship between a maximum load of a load-stroke curve obtained by the CAE analysis of the inner cross member and the types a to d of the inner cross member.
FIG. 38: FIG. 38 is a diagram for explaining a load acting on the inner cross member via a rigid wall in the CAE analysis.
FIG. 39: FIG. 39 is a diagram illustrating a maximum load (proof stress) of a load-stroke curve obtained by the CAE analysis of the inner cross member.
FIG. 40: FIG. 40(a) is a diagram illustrating an evaluation load obtained by evaluating a load with a reference punch intrusion amount at the time when a load simulating side surface collision by a pole is applied from both support points to the center about a correspondence relationship between an interval in the vehicle front-rear direction in which the inner cross member is disposed and a dimension ratio and a plate thickness of the side frame and FIG. 40(b) is a diagram for explaining the dimension of the side frame.

### Description of Embodiments

Hereinafter, a battery case in an embodiment of the present invention is specifically explained with reference to the drawings. Note that constituent elements in the embodiment explained below include those that can be easily replaced by those skilled in the art or those that are substantially the same.

### <Overall configuration>

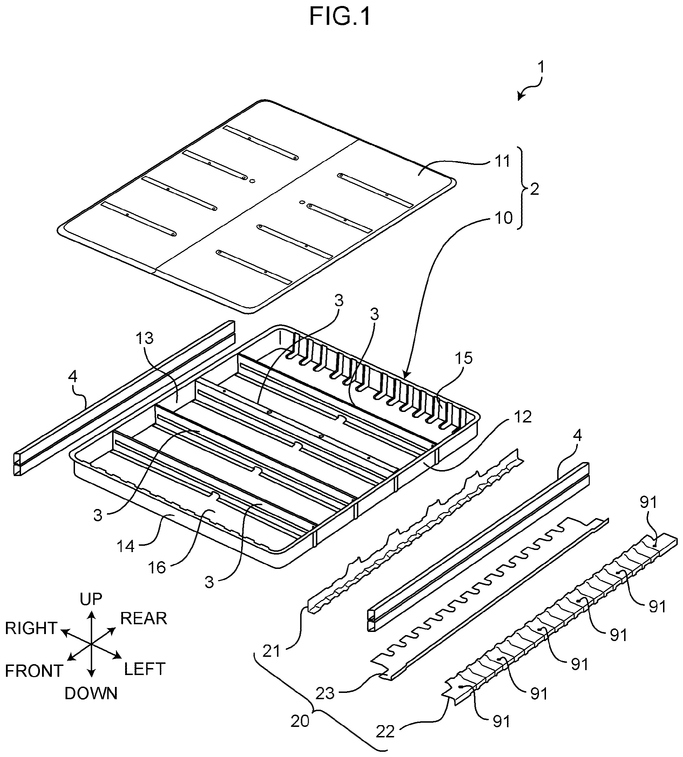

FIG. 1 is an exploded diagram for explaining an overall configuration of the battery case in the embodiment. A battery case 1 includes a main body 2 that houses a battery, an inner cross member 3 disposed on the inside of the main body 2, and a side frame 4 disposed on the outside of the main body 2.

The battery case 1 is mounted on an electric vehicle in a state in which the battery is housed on the inside of the main body 2. The electric vehicle is a vehicle mounted with a motor for traveling and is, for example, a vehicle such as an electric automobile or a hybrid vehicle. The electric vehicle mounted with the battery case 1 includes the motor for traveling and the battery housed in the battery case 1 and travels by driving the motor by supplying electric power stored in the battery to the motor. The motor is a motor generator capable of functioning as an electric motor and a generator. The battery is configured by a secondary battery such as a lithium ion battery. The battery in the battery case 1 and the motor for traveling are electrically connected. The battery housed in the battery case 1 is a battery module including a plurality of battery cells. A plurality of battery modules are housed on the inside of the battery case 1. That is, the battery case 1 is a case portion of a battery pack.

In this explanation, structure and disposition are explained using a direction in a state in which the battery case 1 is mounted on the electric vehicle. A front side and a rear side are described as expressions indicating the front and the rear in the vehicle front-rear direction. The left side and the right side are described as expressions indicating the left and the right in the vehicle width direction. The left side in the case in which the electric vehicle is viewed from the rear side to the front side is the vehicle width direction left side and the right side in that case is the vehicle width direction right side. The vehicle width direction is sometimes explained using the inner side and the outer side. The upper side and the lower side are described as expressions indicating upward and downward in the vehicle height direction.

The main body 2 includes a tray 10 formed by a bottomed frame body and a cover 11 that closes an upper opening of the tray 10. An internal space of the main body 2 formed by the tray 10 and the cover 11 configures a housing chamber that houses the battery. The battery provided in the electric vehicle is mounted on a vehicle body in a state of being housed on the inside of the main body 2. The main body 2 is a structure in which the tray 10 and the cover 11 are integrated.

The tray 10 includes a pair of side wall portions 12 and 13 facing each other in the vehicle width direction in a state of being mounted on the vehicle body, a front wall portion 14 and a rear wall portion 15 facing each other in the vehicle front-rear direction, and a bottom 16 formed in a quadrangular shape. The tray 10 has structure in which the side wall portions 12 and 13, the front wall portion 14, the rear wall portion 15, and the bottom 16 are integrally formed. The side wall portion 12 on the left side, the side wall portion 13 on the right side, the front wall portion 14, and the rear wall portion 15 stand upward in the vehicle height direction from the peripheral edge of the bottom 16. The tray 10 needs to have depth capable of housing the battery and is, for example, a steel structure manufactured by deep drawing in which a steel sheet having tensile strength of 440 Ma class or less is used.

An upper portion of the tray 10 is a portion to which the cover 11 is attached and is formed by an upper portion of the side wall portion 12, an upper portion of the side wall portion 13, an upper portion of the front wall portion 14, and an upper portion of the rear wall portion 15. The upper portion of the tray 10 is formed in a rectangular frame shape.

The cover 11 is a lid that covers the upper opening of the tray 10. The cover 11 is attached to the upper portion of the tray 10 by, for example, bolt fastening to close the upper opening of the tray 10.

In a state in which the tray 10 and the cover 11 are integrated, the inner cross member 3 and the side frame 4 are integrated with the main body 2. The inner cross member 3 and the side frame 4 are reinforcing members that reinforce the main body 2. The reinforcing members are also stiffening members that stiffen the main body 2. The battery case 1 is formed into a structure that increases the rigidity of the main body 2 by the inner cross member 3 and the side frame 4 integrated with the main body 2.

The inner cross member 3 is provided on the inside of the main body 2 and is integrated with the main body 2 to reinforce the tray 10. The inner cross member 3 is provided in the main body 2 to extend over a pair of side wall portions 12 and 13 facing each other in the vehicle width direction. The inner cross member 3 is a member that extends in the vehicle width direction in the main body 2 and receives a load in the vehicle width direction input to the main body 2 from the outside of the main body 2 and acting on the tray 10. Since the inner cross member 3 extends in the vehicle width direction, the longitudinal direction of the inner cross member 3 is the same direction as the vehicle width direction.

The battery case 1 includes a plurality of inner cross members 3 disposed at predetermined intervals in the vehicle front-rear direction. As illustrated in FIG. 1, four inner cross members 3 disposed at equal intervals in the vehicle front-rear direction are provided on the inside of the tray 10. Each of the four inner cross members 3 is configured to extend in the vehicle width direction and extend over the side wall portion 12 on the left side and the side wall portion 13 of the right side.

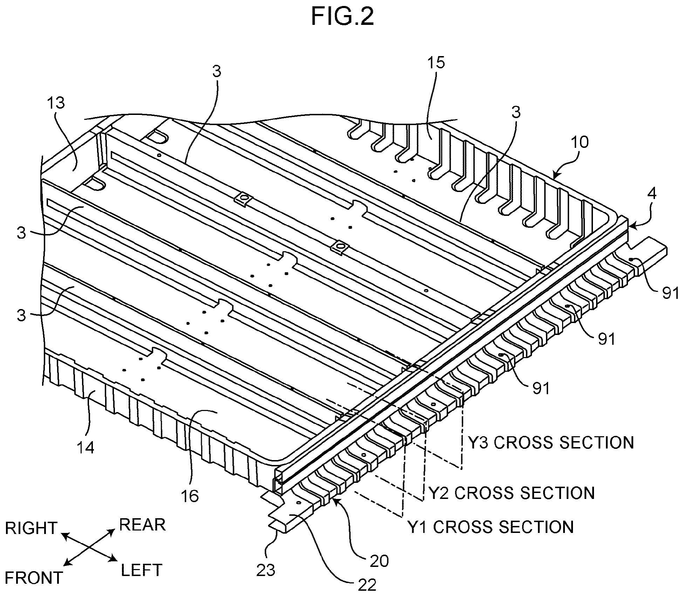

The side frame 4 is provided on the outside of the main body 2 and is integrated with the main body 2 to reinforce the tray 10. As illustrated in FIG. 2, the side frame 4 is integrated with the main body 2 via a fixing member 20. The fixing member 20 is a member that fixes the main body 2 to the vehicle body and is a member that fixes the side frame 4 to the main body 2. As illustrated in FIG. 1, the fixing member 20 has structure in which a first fixing member 21, a second fixing member 22, and a third fixing member 23 are integrated and extends in the vehicle front-rear direction.

The side frame 4 extends in the vehicle front-rear direction outside the main body 2 and faces the outer surfaces of the side wall portions 12 and 13 in the vehicle width direction. The side frame 4 includes two side frames disposed to sandwich the tray 10 from the vehicle width direction both sides. The battery case 1 includes the side frame 4 on the left side facing the outer surface of the side wall portion 12 in the vehicle width direction and the side frame 4 on the right side facing the outer surface of the side wall portion 13.

The side frame 4 is formed longer than the vehicle front-rear direction length of the side wall portions 12 and 13. The side frame 4 on the left side is configured to face, in the vehicle width direction, the entire outer surface of the side wall portion 12 in the vehicle front-rear direction. The side frame 4 on the right side is configured to face, in the vehicle width direction, the entire outer surface of the side wall portion 13 in the vehicle front-rear direction. The side frame 4 is a member that extends in the vehicle front-rear direction at a position facing the side wall portions 12 and 13 of the tray 10 in the vehicle width direction outside the main body 2 and receives a load in the vehicle width direction input to the tray 10 from the outside of the main body 2.

### <Structure of the inner cross member>

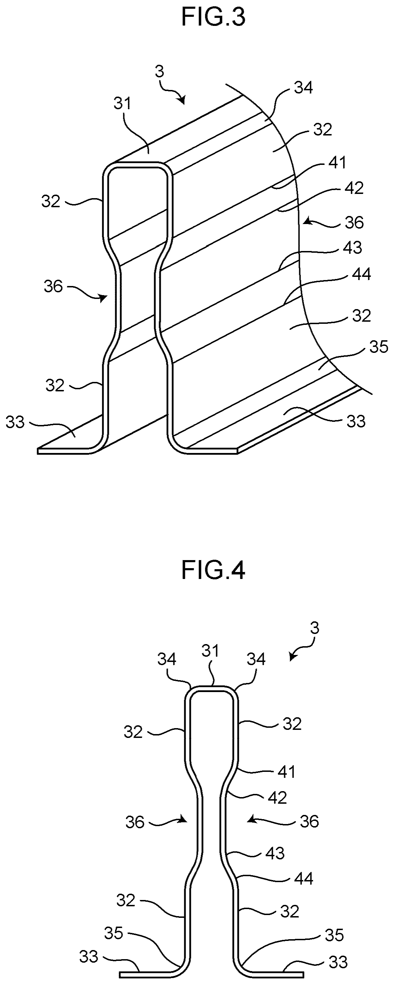

FIG. 3 is a perspective view for explaining the structure of the inner cross member. FIG. 4 is a diagram illustrating the inner cross member as viewed from the vehicle width direction. In FIG. 3, only one side end portion in the longitudinal direction of the inner cross member 3 is illustrated.

The inner cross member 3 includes a top plate section 31, a vertical wall portion 32, a flange section 33, an upper bent section 34, a lower bent section 35, and a recess 36.

The top plate section 31 is a portion forming the apex of the inner cross member 3. The top plate section 31 has a cross-sectional shape extending in the vehicle front-rear direction in a cross section orthogonal to the vehicle width direction.

The vertical wall portion 32 is a portion forming a wall portion of the inner cross member 3. The vertical wall portion 32 forms a portion between the top plate section 31 and the flange section 33. The vertical wall portion 32 is formed in series with the top plate section 31 via the upper bent section 34 and is formed in series with the flange section 33 via the lower bent section 35. A portion between the upper bent section 34 and the lower bent section 35 is the vertical wall portion 32. The vertical wall portion 32 is configured by a pair of wall portions facing each other in the vehicle front-rear direction. The vertical wall portion 32 includes the vertical wall portion 32 on the front side formed on the front side in the vehicle front-rear direction and the vertical wall portion 32 on the rear side formed on the rear side in the vehicle front-rear direction. The vertical wall portion 32 includes a front vertical wall portion continuously formed on the front side in the vehicle front-rear direction from the top plate section 31 and a rear vertical wall portion continuously formed on the rear side in the vehicle front-rear direction from the top plate section 31. The front vertical wall portion and the rear vertical wall portion face each other in the vehicle front-rear direction. In the following explanation, the "vertical wall portion 32 of the front side formed on the front side in the vehicle front-rear direction" is sometimes simply described as "vertical wall portion 32 on the front side" and the " vertical wall portion 32 on the rear side formed on the rear side" is sometimes simply described as "vertical wall portion 32 on the rear side".

In the vertical wall portion 32, the recess 36 including a plurality of ridgeline portions extending in the vehicle width direction is provided. The recess 36 has a shape in which a part of the vertical wall portion 32 is recessed to the other vertical wall portion 32 side. The recess 36 extends in the vehicle width direction. The recess 36 is formed over the entire length in the longitudinal direction of the inner cross member 3. The vertical wall portion 32 includes a portion where the recess 36 is formed, a portion further on the top plate section 31 side than the recess 36, and a portion further on the flange section 33 side than the recess 36.

The recess 36 is formed by a first ridgeline portion 41, a second ridgeline portion 42, a third ridgeline portion 43, and a fourth ridgeline portion 44. In the vertical wall portion 32, the first ridgeline portion 41, the second ridgeline portion 42, the third ridgeline portion 43, and the fourth ridgeline portion 44 are provided.

As illustrated in FIG. 3, the ridgeline portions 41, 42, 43, and 44 extend in the vehicle width direction. The ridgeline portions 41, 42, 43, and 44 are formed over the entire length in the longitudinal direction of the inner cross member 3. As illustrated in FIG. 4, the first ridgeline portion 41, the second ridgeline portion 42, the third ridgeline portion 43, and the fourth ridgeline portion 44 are provided at different positions in the vehicle height direction. The first ridgeline portion 41, the second ridgeline portion 42, the third ridgeline portion 43, and the fourth ridgeline portion 44 are provided in this order from the upper side in the vehicle height direction.

The first ridgeline portion 41 is, in the vertical wall portion 32, a boundary portion between an upper portion extending in the vehicle height direction and an upper inclined portion extending to be inclined with respect to the vehicle height direction to approach the other vertical wall portion 32. The second ridgeline portion 42 is, in the vertical wall portion 32, a boundary portion between the upper inclined portion and an intermediate portion extending in the vehicle height direction. The third ridgeline portion 43 is, in the vertical wall portion 32, a boundary portion between the intermediate portion and a lower inclined portion extending to be inclined with respect to the vehicle height direction to be separated from the other vertical wall portion 32. The fourth ridgeline portion 44 is, in the vertical wall portion 32, a boundary portion between the lower inclined portion and a lower portion extending in the vehicle height direction.

As explained above, a plurality of ridgeline portions are formed in the vertical wall portion 32. The vertical wall portion 32 has structure bent in a convex shape to one side and/or the other side in the out-of-plane direction of the vertical wall portion 32. For that reason, the vertical wall portion 32 has a portion extending in the vehicle height direction, a portion inclined with respect to the vehicle height direction, and a bent section as a cross-sectional shape orthogonal to the vehicle width direction. In addition to the ridgelines extending in the longitudinal direction (the vehicle width direction) formed in the upper bent section 34 and the lower bent section 35 of the inner cross member 3, the plurality of ridgeline portions extending in the longitudinal direction (the vehicle width direction) over the entire length in the longitudinal direction of the inner cross member 3 is also formed in the vertical wall portion 32 of the inner cross member 3. Accordingly, rigidity (proof stress) against a load (a side collision load) input in the longitudinal direction (the vehicle width direction) from the end portion of the inner cross member 3 can be improved.

In order to improve buckling strength against the load input in the longitudinal direction from the end portion of the inner cross member 3, the ridgeline portion (including the recess 36) formed in the vertical wall portion 32 of the inner cross member 3 needs to continuously extend in the longitudinal direction over the entire length in the longitudinal direction of the inner cross member 3. When a partial ridgeline portion in the longitudinal direction is provided in the vertical wall portion 32 of the inner cross member 3, the vertical wall portion 32 includes a part where a ridgeline portion is not provided at any position in the longitudinal direction. For that reason, in this case, at the time of side surface collision of the electric vehicle, deformation concentrates on a part where no ridgeline portion is provided and the buckling strength is relatively low in the vertical wall portion 32 and the buckling strength of the entire inner cross member 3 cannot be improved.

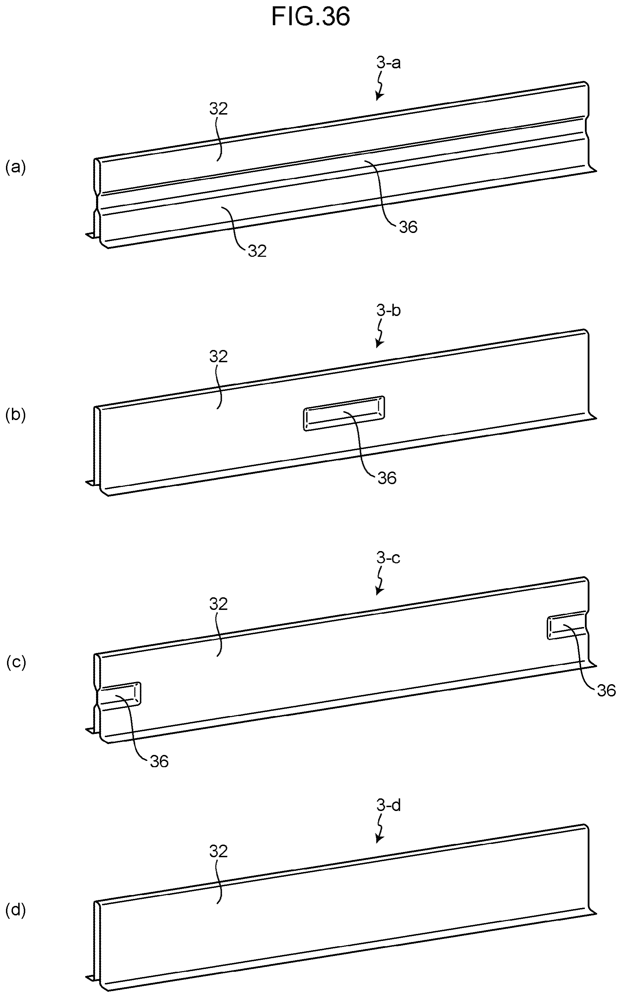

A CAE analysis was performed in order to check this point. The inner cross members 3 set as a target of the CAE analysis are four types of inner cross members 3 in which the position in the longitudinal direction forming the ridgeline portion (the recess 36) of the vertical wall portion 32 illustrated in FIG. 4 is changed as illustrated in FIG. 36. Note that types a, b, c, and d are described as inner cross members 3 when not being particularly distinguished.

In an inner cross member 3-a of the type a, the ridgeline portion (the recess 36) of the vertical wall portion 32 illustrated in FIG. 4 is formed over the entire length in the longitudinal direction.

In an inner cross member 3-b of the type b, the ridgeline portion (the recess 36) of the vertical wall portion 32 illustrated in FIG. 4 is formed at the center in the longitudinal direction by length of 15% with respect to the overall length in the longitudinal direction of the inner cross member 3-b.

In an inner cross member 3-c of the type c, the ridgeline portions (the recesses 36) of the vertical wall portion 32 illustrated in FIG. 4 are formed at both ends in the longitudinal direction by length of 8% with respect to the overall length in the longitudinal direction of the inner cross member 3-c.

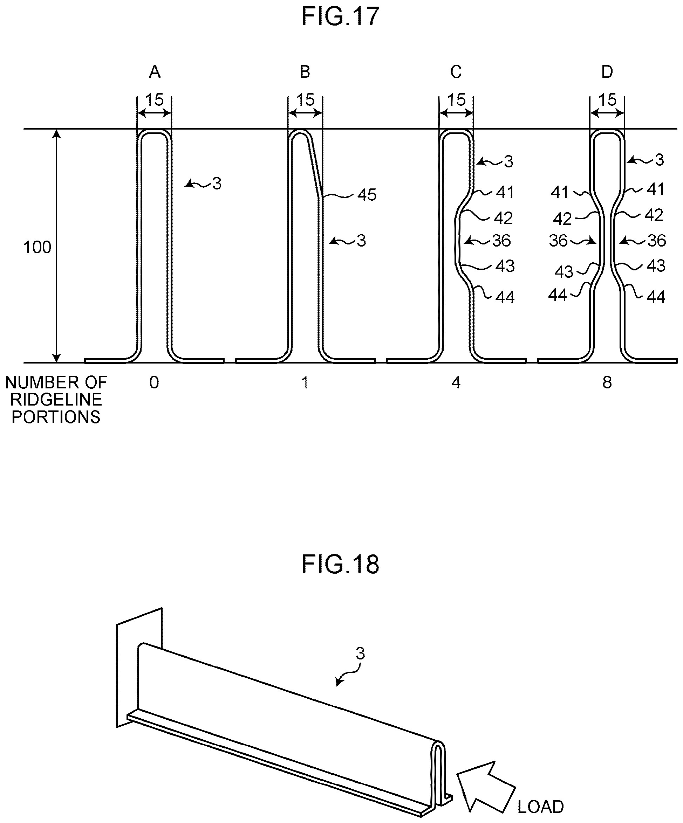

An inner cross member 3-d of the type d is formed in a hat cross-sectional shape and the ridgeline portion (the recess 36) is not provided in the vertical wall portion 32 (see a type A illustrated in FIG. 17).

For the structures of the types a to d, as illustrated in FIG. 18, the CAE analysis was performed in which one end of one side of the inner cross member 3 was fixed and a load in the longitudinal direction (the vehicle width direction) was applied to the other end to deform the inner cross member 3 by 3 mm. This load is an axis direction load acting in the longitudinal direction of the inner cross member 3.

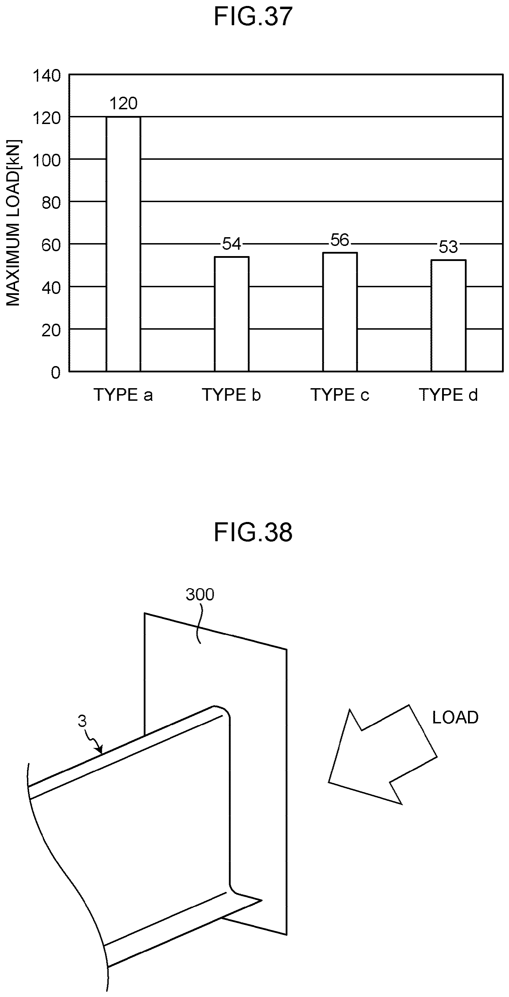

FIG. 37 is a diagram illustrating a correspondence relationship between a maximum load (proof stress) of a load-stroke curve obtained by the CAE analysis of the inner cross member and the types of the inner cross member. The maximum load of the load-stroke curve is a load (proof stress) with which the inner cross member 3 starts buckling deformation at the time of changing to plastic deformation through elastic deformation immediately after starting deformation and indicates proof stress against side surface collision. As the maximum load (proof stress) is higher, plastic deformation at the time of collision less easily occurs and collision characteristics are better.

As illustrated in FIG. 37, when the ridgeline portions (the recesses 36) are partially formed at the center (the type b) or both the end portions (the type c) in the longitudinal direction, the maximum load (proof stress) of the inner cross member 3 is increased by 2% and 6%, respectively, with respect to the load (the proof stress) of type d. On the other hand, in the type a in which the ridgeline portion (the recess 36) is formed over the entire length in the longitudinal direction, the maximum load (proof stress) is 126% higher with respect to the load (the proof stress) of the type d. The buckling strength can be significantly improved compared with the type b and the type c in which the ridgeline portion (the recess 36) is partially formed in the longitudinal direction.

The flange section 33 is a portion forming the bottom of the inner cross member 3 and has a cross-sectional shape extending in the vehicle front-rear direction in the cross section orthogonal to the vehicle width direction. The flange section 33 is configured by a pair of flange sections extending to the outer side in the vehicle front-rear direction from the pair of vertical wall portions 32. The flange section 33 includes the flange section 33 on the front side protruding from the vertical wall portion 32 on the front side toward the front side in the vehicle front-rear direction and the flange section 33 on the rear side protruding from the vertical wall portion 32 on the rear side toward the rear side in the vehicle front-rear direction.

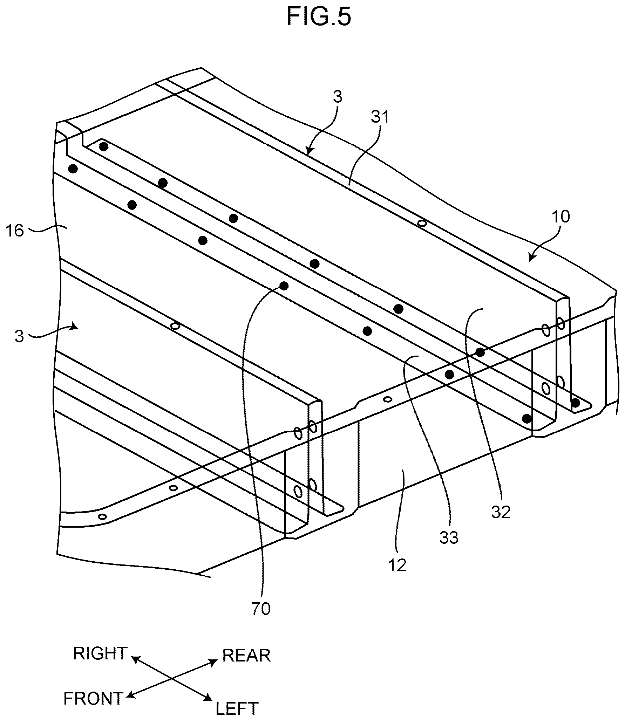

The flange section 33 is attached to the bottom 16 of the tray 10. As illustrated in FIG. 5, the flange section 33 is joined to the bottom 16 of the tray 10 by a welded portion 70. The welded portion 70 is a welded portion that joins the flange section 33 and the bottom 16 of the tray 10 and is formed by, for example, spot welding. The inner cross member 3 and the bottom 16 of the tray 10 form a closed cross-sectional structure, whereby the proof stress can be increased. Accordingly, at the time of the side surface collision of the electric vehicle, cross section collapse of the inner cross member 3 due to an axis direction load less easily occurs and buckling of the inner cross member 3 can be suppressed.

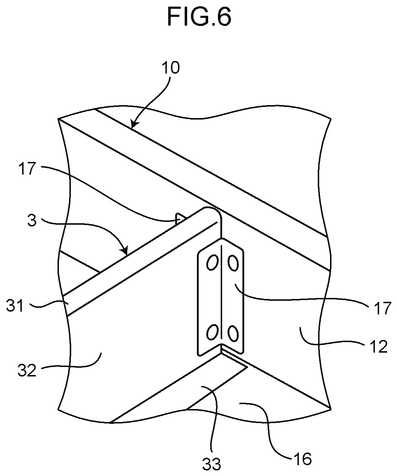

As illustrated in FIG. 6, both the end portions in the vehicle width direction of the inner cross member 3 are attached to the side wall portions 12 and 13 of the tray 10 via brackets 17. The inner cross member 3 is integrated with the side wall portions 12 and 13 by the brackets 17. The vertical wall portion 32 (both the vertical wall portion 32 on the front side and the vertical wall portion 32 on the rear side) and the side wall portions 12 and 13 of the inner cross member 3 are connected by the brackets 17. The brackets 17 include the bracket 17 on the left side that couples the left end portion in the vehicle width direction of the inner cross member 3 and the side wall portion 12 and the bracket 17 on the right side that couples the right end portion in the vehicle width direction of the inner cross member 3 and the side wall portion 13. Both the end portions in the vehicle width direction of the inner cross member 3 are inclined along the inner surface shapes (slope shapes) of the side wall portions 12 and 13 and are in contact with the side wall portions 12 and 13. In this contact state, the inner cross member 3 is attached to the side wall portions 12 and 13 by the brackets 17. Note that, in FIG. 6, the recess 36 is omitted.

As a method of connecting the vertical wall portion 32 of the inner cross member 3 and the side wall portions 12 and 13 of the tray 10, both of the vertical wall portion 32 on the front side and the vertical wall portion 32 on the rear side are preferably connected to the side wall portions 12 and 13 by the brackets 17. Accordingly, at the side surface collision of the electric vehicle, cross section collapse of the inner cross member 3 due to the axis direction load less likely occurs and the axis direction load is dispersed and received by both of the vertical wall portion 32 on the front side and the vertical wall portion 32 on the rear side of the inner cross member 3. Therefore, the buckling of the inner cross member 3 can be suppressed.

With the CAE analysis explained above performed to check this point, as compared with when both of the vertical wall portion 32 on the front side and the vertical wall portion 32 on the rear side of the inner cross member 3 are connected to the side wall portions 12 and 13 of the tray 10 by the brackets 17, the maximum load (proof stress) of the load-stroke curve decreases by 26% when one of the brackets 17 on the front side and the rear side is removed and the maximum load (proof stress) decreases by 62% when both of the brackets in the front side and the rear side are removed.

The proof stress of the inner cross member 3 is higher as the yield strength of a metal plate used for the inner cross member 3 is higher. For that reason, the inner cross member 3 is preferably formed from a steel sheet having a yield strength of 500 MPa class or more by roll forming or press forming. That is, the steel sheet forming the inner cross member 3 is preferably a steel sheet having tensile strength of 590 MPa class or more. The steel sheet forming the inner cross member 3 is more preferably a steel sheet having tensile strength of 980 MPa class or more and particularly preferably a steel sheet having tensile strength of 1180 MPa class or more.

### <Structure of the side frame>

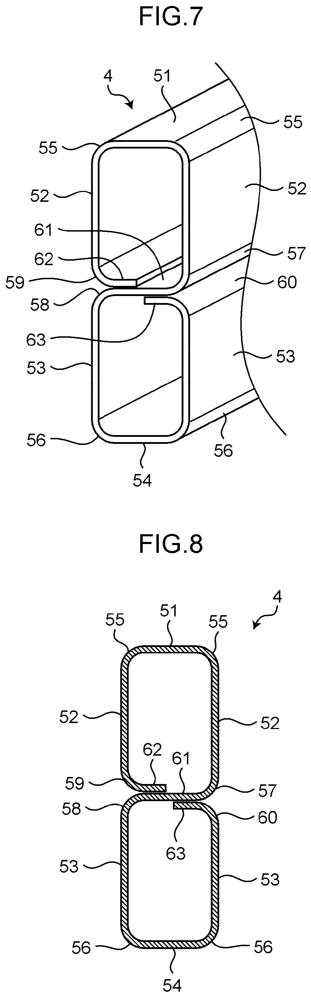

FIG. 7 is a perspective view for explaining the structure of the side frame. FIG. 8 is a cross-sectional view illustrating a cross-sectional shape of the side frame.

The side frame 4 is configured by a structure made of steel sheet having a figure-eight cross section in which two rectangles are overlapped in the vehicle height direction. The side frame 4 is formed by roll forming and has structure in which upper and lower quadrangular shapes are joined by continuous welding. The continuous welding includes welding methods such as arc welding and laser welding. The side frame 4 is a structure including a plurality of ridgeline portions (bent portions) extending in the vehicle front-rear direction by repeating mountain fold and/or valley fold of the steel sheet. The side frame 4 has a plurality of cross sections extending in the vehicle width direction.

The side frame 4 includes an upper surface portion 51, a side surface portion 52 on the upper side, a side surface portion 53 on the lower side, a lower surface portion 54, a first ridgeline portion 55, a second ridgeline portion 56, a third ridgeline portion 57, a fourth ridgeline portion 58, a fifth ridgeline portion 59, a sixth ridgeline portion 60, an intermediate surface portion 61 in the center, an end portion 62 on the upper side, and an end portion 63 on the lower side.

The upper surface portion 51 is a portion forming a first cross section extending in the vehicle width direction. The upper surface portion 51 and the side surface portion 52 are formed in series via the first ridgeline portion 55. The side surface portion 52 on the upper side and the side surface portion 53 on the lower side are wall portions extending in the vehicle height direction. The lower surface portion 54 is a portion forming a second cross section extending in the vehicle width direction. The lower surface portion 54 and the side surface portion 53 are formed in series via the second ridgeline portion 56.

The intermediate surface portion 61 is a portion forming a third cross section extending in the vehicle width direction. The intermediate surface portion 61 and the side surface portion 52 on the upper side are formed in series via the third ridgeline portion 57. The intermediate surface portion 61 and the side surface portion 53 on the lower side are formed in series via the fourth ridgeline portion 58.

The end portion 62 on the upper side is a portion in contact with the upper surface of the intermediate surface portion 61. The end portion 62 on the upper side and the side surface portion 52 on the upper side are formed in series via the fifth ridgeline portion 59. In the side frame 4, the fifth ridgeline portion 59 and the fourth ridgeline portion 58 are joined by welding. The side frame 4 has structure in which the fourth ridgeline portion 58 and the fifth ridgeline portion 59 are joined by a welded portion in a state in which the lower surface of the end portion 62 and the upper surface of the intermediate surface portion 61 are in surface contact. The side surface portion 52 is provided continuously to the intermediate surface portion 61 via the fifth ridgeline portion 59. The side surface portion 52 and the intermediate surface portion 61 are integrated via the fifth ridgeline portion 59 and the welded portion. The welded portion is provided to continuously or intermittently join the fourth ridgeline portion 58 and the fifth ridgeline portion 59 in the vehicle front-rear direction.

The end portion 63 on the lower side is a portion in contact with the lower surface of the intermediate surface portion 61. The end portion 63 on the lower side and the side surface portion 53 on the lower side are formed in series via the sixth ridgeline portion 60. In the side frame 4, the sixth ridgeline portion 60 and the third ridgeline portion 57 are joined by welding. The side frame 4 has structure in which the third ridgeline portion 57 and the sixth ridgeline portion 60 are joined by a welded portion in a state in which the upper surface of the end portion 63 and the lower surface of the intermediate surface portion 61 are in surface contact. The side surface portion 53 is provided continuously to the intermediate surface portion 61 via the sixth ridgeline portion 60. The side surface portion 53 and the intermediate surface portion 61 are integrated via the sixth ridgeline portion 60 and the welded portion. The welded portion is provided to continuously or intermittently join the third ridgeline portion 57 and the sixth ridgeline portion 60 in the vehicle front-rear direction. All of the first to sixth ridgeline portions 55, 56, 57, 58, 59, and 60 are bent portions.

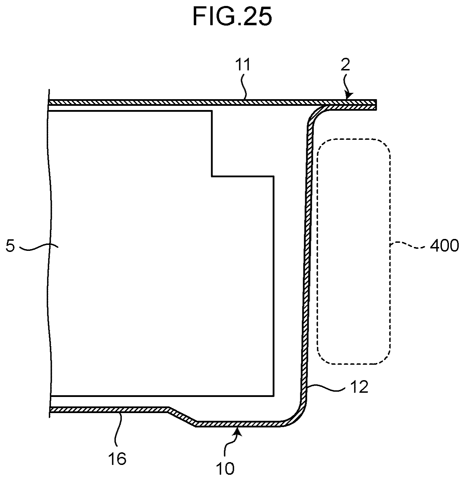

The side frame 4 has structure in which four ridgeline portions including the third to sixth ridgeline portions 57, 58, 59, and 60 and one cross section including the intermediate surface portion 61 are added to a side frame (for example, a side frame 400 illustrated in FIG. 25) having a simple quadrangular cross section as a whole. As explained above, in the structure made of the steel sheet in which the steel sheet is repeatedly mountain folded and/or valley folded, the plurality of ridgeline portions (bent portions) extending in the longitudinal direction (the vehicle front-rear direction) are formed in a mountain folded and/or valley folded portion and the plurality of cross sections extending in the direction orthogonal to the longitudinal direction (the vehicle width direction) and crossing or inclining in the vehicle width direction are formed, whereby the bending rigidity against the load (the side collision load) input from the direction orthogonal to the longitudinal direction of the side frame 4 (the vehicle width direction) can be enhanced. For that reason, the side frame 4 has high load-bearing performance (proof stress) even against a side collision load in the vehicle width direction.

The proof stress of the side frame 4 is higher as the yield strength of the metal plate used for the side frame 4 is higher. The side frame 4 is desirably made of a steel sheet having higher yield strength compared with an aluminum alloy. This aluminum alloy is, for example, YS140MPa of an Al-Si-Mg-based casting alloy. The steel sheet having the higher yield strength is, for example, a steel sheet YS420MPa of having tensile strength of 590 MPa class. In particular, the side frame 4 is desirably made of a steel sheet having tensile strength of 1180 MPa class or more.

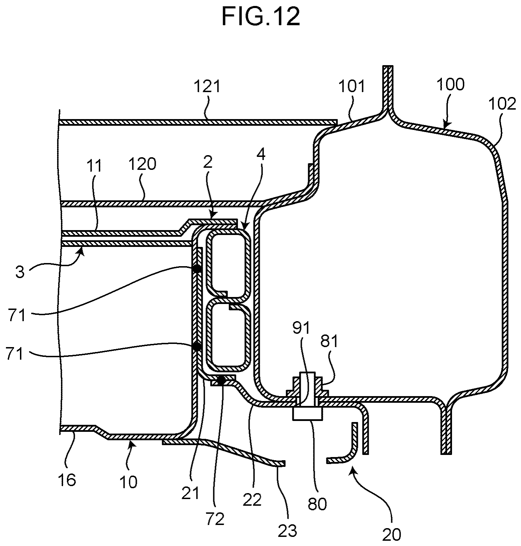

In the battery case 1, the side frame 4 has structure in which a plurality of ridgeline portions are formed in the vehicle front-rear direction by repeating mountain fold and/or valley fold of a steel sheet. Accordingly, it is possible to increase proof stress against a collision load input to the battery case 1 through the side sill 100 (illustrated in FIG. 12) at the time of side surface collision of the electric vehicle. Since the side frame 4 has three cross sections including the upper surface portion 51, the lower surface portion 54, and the intermediate surface portion 61, it is possible to improve load-bearing performance against a load acting in the vehicle width direction at the time of side surface collision of the electric vehicle. In the side frame 4, an interval in the vehicle height direction between the cross sections extending in the vehicle width direction is set to half or less of the depth of the tray 10.

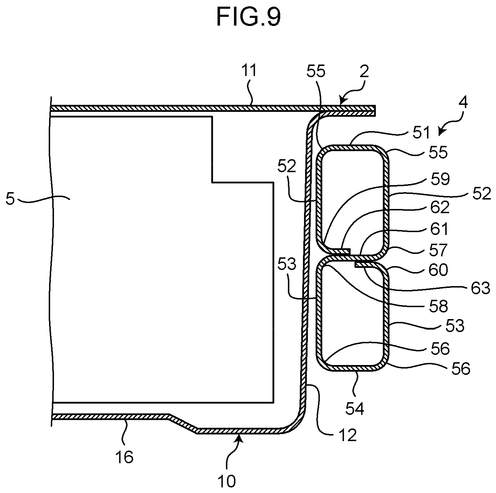

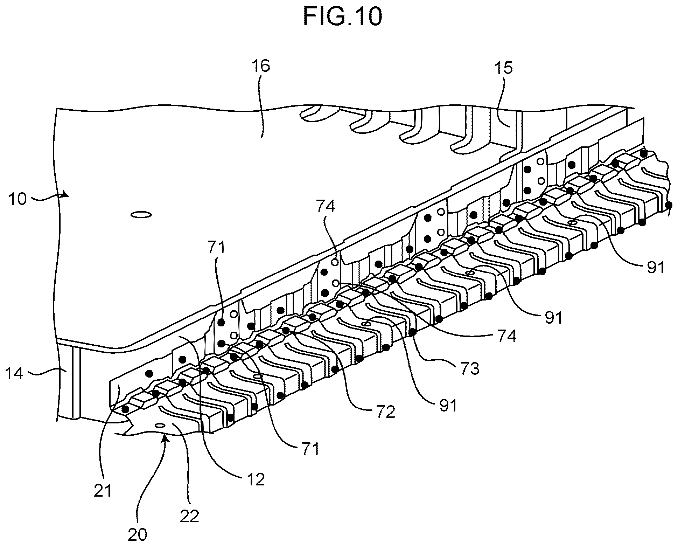

As illustrated in FIG. 9, the side frame 4 is disposed at a position facing the outer surface of the side wall portion 12 of the tray 10 in the vehicle width direction. Similarly, the side frame 4 is disposed at a position facing the outer surface of the side wall portion 13 of the tray 10 in the vehicle width direction. The side frame 4 is connected to the tray 10 via a fixing member 20 (see FIG. 10).

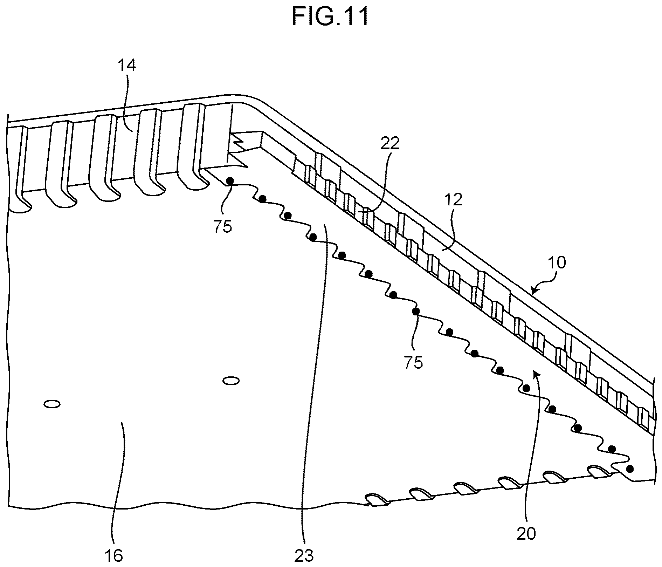

As illustrated in FIG. 10, the fixing member 20 is joined to the tray 10 by welding. The first fixing member 21 is joined to the side wall portion 12 of the tray 10 by a welded portion 71. The first fixing member 21 and the second fixing member 22 are joined by a welded portion 72. The second fixing member 22 and the third fixing member 23 are joined by a welded portion 73. In the first fixing member 21, bolt positions 74 to which weld bolts are fixed are provided. The bolt positions 74 are portions that are located on the outer surface (a surface facing the vehicle width direction outer side) of the first fixing member 21 and to which head portions of the weld bolts are welded. At the bolt positions 74, the head portions of the weld bolts are fixed to the first fixing member 21. The weld bolts fixed to the bolt positions 74 is weld bolts 82 explained below. As illustrated in FIG. 11, the third fixing member 23 is joined to the bottom 16 of the tray 10 by a welded portion 75. All of the welded portion 71, the welded portion 72, the welded portion 73, and the welded portion 75 are formed by spot welding. As explained below, the side frame 4 is joined to the side wall portions 12 and 13 of the tray 10 via the weld bolts 82 fixed to the bolt positions 74 and the first fixing member 21. The bolt positions 74 are, in the side wall portions 12 and 13, outer surface sides of portions to which both the end portions in the vehicle width direction of the inner cross member 3 are attached.

The fixing member 20 has structure in which the first fixing member 21, the second fixing member 22, and the third fixing member 23 are integrated by the welded portions 72 and 73. The fixing member 20 is integrated with the tray 10 by the welded portions 71 and 75. Further, the fixing member 20 is attached to the side sill 100 of the vehicle body structure by bolt fastening. For that reason, the battery case 1 is fixed to the side sill 100 via the fixing member 20. That is, the battery case 1 is supported by the side sill 100 via the fixing member 20. The fixing member 20 functions as a support member that supports the battery case 1.

### <In-vehicle structure>

The electric vehicle mounted with the battery case 1 needs to have structure capable of withstanding a collision load input to the battery case 1 through the side sill 100 at the time of collision and protecting the battery in the battery case 1. The structure capable of protecting the battery is structure capable of preventing the tray 10 (the main body 2) deformed by the collision load from coming into contact with the battery.

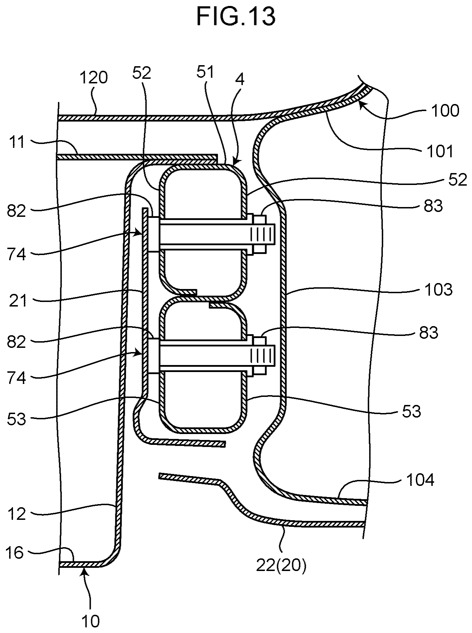

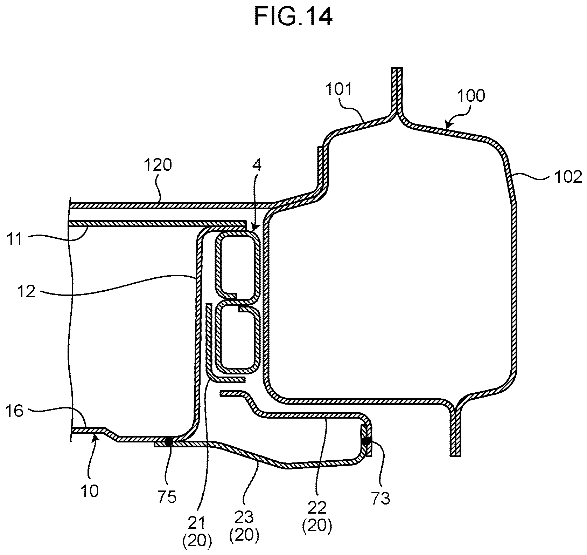

Disposition examples at the time when the battery case 1 is mounted on the vehicle body are illustrated in FIG. 12 to FIG. 14. Note that, in FIG. 12, a cross-sectional view of a Y1 cross section illustrated in FIG. 2 is illustrated. In FIG. 13, a cross-sectional view of a Y2 cross section illustrated in FIG. 2 is illustrated. In FIG. 14, a cross-sectional view of a Y3 cross section illustrated in FIG. 2 is illustrated. The Y1 cross section, the Y2 cross section, and the Y3 cross section are cross sections at different positions in the vehicle front-rear direction. The Y1 cross section is a cross section including a position where the inner cross member 3 is provided. The Y2 cross section is a cross section including a position where the inner cross member 3 is absent and a position where a fixing structure of the side frame 4 and the fixing member 20 is provided. The Y3 cross section is a cross section including a position where the inner cross member 3 is absent and a position where the fixing structure of the side frame 4 and the fixing member 20 is not provided.

As illustrated in FIG. 12, the battery case 1 is mounted under the floor of the vehicle body and is disposed below a floor panel 120 and on the vehicle width direction inner side of the side sill 100. The floor panel 120 is formed to spread between a pair of side sills 100. The floor panel 120 is disposed below a floor cross member 121. The floor cross member 121 is provided on the upper surface of the floor panel 120, extends in the vehicle width direction, and extends over the pair of side sills 100. Both the end portions in the vehicle width direction of the floor cross member 121 are attached to the side sills 100. The battery case 1 is disposed below the floor panel 120. The lower surface of the floor panel 120 and the upper surface of the cover 11 face each other in the vehicle height direction. In vehicle side view, the side sill 100 and the battery case 1 are disposed at positions overlapping each other. The side sill 100 is a member also called rocker in the vehicle body structure. In FIG. 12, the brackets 17 are omitted.

The side sill 100 is an elongated vehicle body framework member extending in the vehicle front-rear direction and having a closed cross-sectional shape and a pair of left and right side sills 100 are provided on both the sides in the vehicle width direction. The side sill 100 includes an inner member 101 and an outer member 102 made of a press-molded material. The inner member 101 is a member configuring an inner side portion in the vehicle width direction of the side sill 100 and bulges to the inner side in the vehicle width direction and extends in the vehicle front-rear direction. The outer member 102 is a member configuring an outer side portion of the side sill 100 in the vehicle width direction and bulges to the outer side in the vehicle width direction and extends in the vehicle front-rear direction.

The inner member 101 is formed in a substantial hat shape in which a cross-sectional shape orthogonal to the vehicle front-rear direction directs an opening to the vehicle width direction outer side. The outer member 102 is formed in a substantial hat shape in which a cross-sectional shape orthogonal to the vehicle front-rear direction directs an opening to the vehicle width direction inner side. Upper portions of the inner member 101 and the outer member 102 are joined to each other and lower portions of the inner member 101 and the outer member 102 are joined to each other. Accordingly, the side sill 100 hollow on the inside is configured. The inner member 101 and the outer member 102 are joined, whereby a closed cross-sectional shape is formed. Note that a stiffening structure for stiffening the side sill 100 is provided on the inside of the side sill 100. In FIG. 12 to FIG. 14, the internal structure of the side sill 100 is omitted and only the outer shapes of the inner member 101 and the outer member 102 are illustrated.

As illustrated in FIG. 12 to FIG. 14, the battery case 1 is fixed to the side sill 100 via the fixing member 20. As illustrated in FIG. 12, the fixing member 20 is fixed to the side sill 100 by bolt fastening. The second fixing member 22 and a lower portion of the inner member 101 are fastened by a bolt 80 and a nut 81. As illustrated in FIG. 10 and FIG. 12, in the second fixing member 22, a through hole 91 through which the bolt 80 is inserted is provided. The nut 81 is, for example, a weld nut disposed inside the side sill 100 and welded to the inner surface of the inner member 101. The through hole 91 is a hole formed to penetrate the second fixing member 22 in the vehicle height direction. The first fixing member 21 is joined to the outer surfaces of the side wall portions 12 and 13 of the tray 10 by the welded portion 71. The first fixing member 21 and the second fixing member 22 are joined by the welded portion 72.

As illustrated in FIG. 13, the side frame 4 is fixed to the fixing member 20. The side frame 4 is fixed to the first fixing member 21 by weld bolts 82 and nuts 83. The head portions of the weld bolts 82 are joined to the first fixing member 21 at the bolt positions 74. Since the first fixing member 21 is joined to the outer surfaces of the side wall portions 12 and 13 of the tray 10 by the welded portion 71, the side frame 4 is joined to the outer surfaces (surfaces facing the vehicle width direction outer side) of the side wall portions 12 and 13 of the tray 10 via the weld bolts 82 and the first fixing member 21.

In the side frame 4, the side surface portions 52 and 53 are joined to the outer surfaces of the side wall portions 12 and 13. The side surface portions 52 and 53 are portions joined to the outer surfaces of the side wall portions 12 and 13. As illustrated in FIG. 7 to FIG. 9, the side surface portion 52 includes the side surface portion 52 on the outer side disposed relatively on the vehicle width direction outer side and formed in series with the intermediate surface portion 61 via the third ridgeline portion 57 and the side surface portion 52 on the inner side disposed relatively on the vehicle width direction inner side and provided continuously to the intermediate surface portion 61 via the fifth ridgeline portion 59. As illustrated in FIG. 7 to FIG. 9, the side surface portion 53 includes the side surface portion 53 on the inner side disposed relatively on the vehicle width direction inner side and formed in series with the intermediate surface portion 61 via the fourth ridgeline portion 58 and the side surface portion 53 on the outer side disposed relatively on the vehicle width direction outer side and provided continuously to the intermediate surface portion 61 via the sixth ridgeline portion 60. As illustrated in FIG. 13, the side surface portion 52 on the inner side and the side surface portion 53 on the inner side are joined to the outer surfaces of the side wall portions 12 and 13 via the weld bolts 82 and the first fixing member 21. The intermediate surface portion 61 is a cross section transverse in the vehicle width direction or a cross section inclined with respect to the vehicle width direction. In the side frame 4, the side surface portions 52 and 53 on the inner side are provided continuously to a cross section (the intermediate surface portion 61) crossing or inclined in the vehicle width direction via the bent portions (the fourth ridgeline portion 58 and the fifth ridgeline portion 59). Since the side surface portions 52 and 53 are joined to the outer surfaces of the side wall portions 12 and 13, the cross-sectional shape of the sub-frame 4 is a cross-sectional shape in which bending rigidity against a load (a side collision load) input from a direction (the vehicle width direction) orthogonal to the longitudinal direction of the sub-frame 4 is increased. Accordingly, collapse at the time of side surface collision can be suppressed and high collision resistance performance (proof stress) can be maintained even after the side surface collision.

The weld bolts 82 include a first weld bolt penetrating the side surface portion 52 of the side frame 4 and a second weld bolt penetrating the side surface portion 53 of the side frame 4. The nuts 83 are attached to a side surface on the vehicle width direction outer side of the side frame 4. The weld bolts 82 and the nuts 83 may be attached to the side frame 4 via a collar. The upper surface of the upper surface portion 51 of the side frame 4 may be joined to the lower surface of the upper portion of the tray 10. As this joining method, spot welding, arc welding, adhesion by an adhesive, and the like are possible. When the side frame 4 is fixed to the fixing member 20 using bolts, the bolts are not limited to weld bolts, and stud bolts may be used.

As illustrated in FIG. 14, the fixing member 20 is joined to the bottom 16 of the tray 10 by the welded portion 75. The second fixing member 22 and the third fixing member 23 are joined by the welded portion 73.

As explained above, according to the embodiment, it is possible to improve the collision performance of the battery case 1 while suppressing an increase in weight by combining the cross-sectional shapes of the inner cross member 3 and the side frame 4 with appropriate things.

### <<Modifications>>

### <Modification of the inner cross member>

The battery case 1 is not limited to the embodiment, and it is possible to configure a modification in which the shapes of the constituent members are different from those in the embodiment.

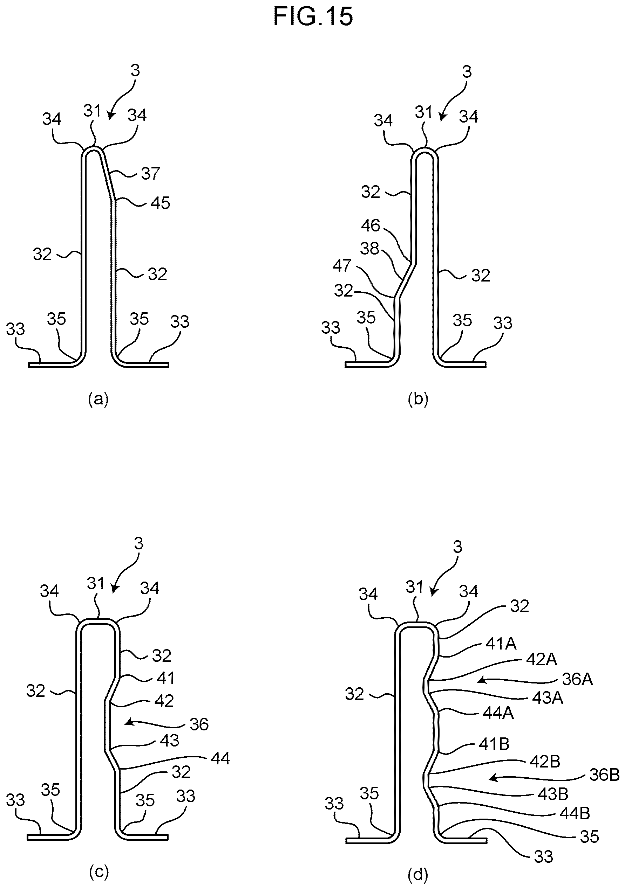

For example, in the inner cross member 3, at least one ridgeline portion only has to be formed in the vertical wall portion 32. The inner cross member 3 is not limited to the structure in which the eight ridgeline portions are formed in the vertical wall portion 32 as illustrated in FIG. 4. A modification of the inner cross member 3 is illustrated in FIG. 15.

As illustrated in FIG. 15(a), the inner cross member 3 in the first modification has structure in which one ridgeline portion 45 and one inclined wall portion 37 are formed in one of the pair of vertical wall portions 32. In the vertical wall portion 32, the inclined wall portion 37 inclined with respect to the vehicle height direction is formed. The ridgeline portion 45 is a boundary portion between, in the vertical wall portion 32, a portion extending in the vehicle height direction and the inclined wall portion 37. The inclined wall portion 37 is a wall portion formed between, in the vertical wall portion 32, a portion extending in the vehicle height direction and the upper bent section 34. The vertical wall portion 32 extends to be inclined with respect to the vehicle height direction to approach the other vertical wall portion 32 between the ridgeline portion 45 and the upper bent section 34.

A set of the ridgeline portion 45 and the inclined wall portion 37 may be provided in at least one of the pair of vertical wall portions 32. When a set of the ridgeline portion 45 and the inclined wall portion 37 is formed in only one of the pair of vertical wall portions 32, the number of ridgeline portions provided in the inner cross member 3 is one. When sets of the ridgeline portion 45 and the inclined wall portion 37 are formed in both of the pair of vertical wall portions 32, the number of ridgeline portions provided in the inner cross member 3 is two.

As illustrated in FIG. 15(b), the inner cross member 3 in the second modification has structure in which two ridgeline portions 46 and 47 and an inclined wall portion 38 are formed in one of the pair of vertical wall portions 32. The inclined wall portion 38 is a wall portion formed between the vertical wall portion 32 on the upper side and the vertical wall portion 32 on the lower and extends to be inclined with respect to the vehicle height direction. The ridgeline portion 46 on the upper side is a boundary portion between the vertical wall portion 32 on the upper side and the inclined wall portion 38. The ridgeline portion 47 on the lower side is a boundary portion between the inclined wall portion 38 and the vertical wall portion 32 on the lower. An interval between facing portions of the pair of vertical wall portions 32 is narrower in an upper side portion than in a lower side portion in the vehicle height direction.

A set of the two ridgeline portions 46 and 47 and the inclined wall portion 38 may be provided in at least one of the pair of vertical wall portions 32. When the set of the two ridgeline portions 46 and 47 and the inclined wall portion 38 is formed in only one of the pair of vertical wall portions 32, the number of ridgeline portions provided in the inner cross member 3 is two. When sets of two ridgeline portions 46 and 47 and the inclined wall portion 38 are formed in both of the pair of vertical wall portions 32, the number of ridgeline portions provided in the inner cross member 3 is four.

As illustrated in FIG. 15(c), the inner cross member 3 in the third modification has structure in which four ridgeline portions 41, 42, 43, and 44 and one recess 36 are formed in only one of the pair of vertical wall portions 32. The inner cross member 3 has structure in which a set of the four ridgeline portions 41, 42, 43, and 44 and the recess 36 is formed in only one of the pair of vertical wall portions 32.

As illustrated in FIG. 15(d), the inner cross member 3 in the fourth modification has structure in which eight ridgeline portions 41A, 41B, 42A, 42B, 43A, 43B, 44A, and 44B and two recesses 36A and 36B are formed in only one of the pair of vertical wall portions 32. The inner cross member 3 has structure in which two sets of four ridgeline portions and recesses are provided on only one of the pair of vertical wall portions 32. The recess 36A on the upper side is formed by the first ridgeline portion 41A on the upper side, the second ridgeline portion 42A on the upper side, the third ridgeline portion 43A on the upper side, and the fourth ridgeline portion 44A on the upper side. The recess 36B on the lower side is formed by the first ridgeline portion 41B on the lower side, the second ridgeline portion 42B on the lower side, the third ridgeline portion 43B on the lower side, and the fourth ridgeline portion 44B on the lower side. In the fourth modification, the one vertical wall portion 32 includes a portion where the recess 36A on the upper side is formed, a portion further on the top plate section 31 side than the recess 36A on the upper side, a portion where the recess 36B on the lower side is formed, a portion further on the flange section 33 side than the recess 36B on the lower side, and a portion between the recess 36A on the lower side and the recess 36B on the lower side. No ridgeline portion is formed in the other vertical wall portion 32.

A method of connecting the inner cross member 3 and the side wall portions 12 and 13 of the tray 10 is not limited to the attachment structure in which the brackets 17 are used and may be joining by welding.

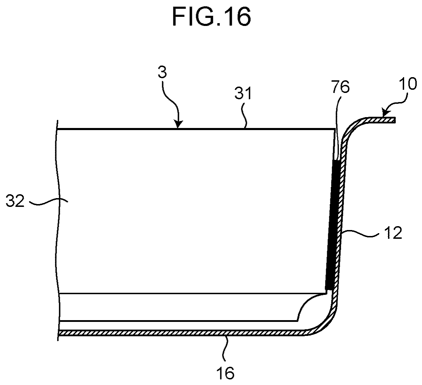

For example, as illustrated in FIG. 16, the vehicle width direction end portions of the inner cross member 3 are inclined along the inclined shapes of the side wall portions 12 and 13 of the tray 10 and are joined by a joining portion 76 in a state of being in contact with the side wall portions 12 and 13. The joining portion 76 is formed by continuous joining such as laser welding or arc welding. Since the vehicle width direction end portion of the inner cross member 3 is closed in a bag shape by the joining portion 76, cross section collapse of the inner cross member 3 much less easily occurs. Accordingly, the proof stress of the inner cross member 3 can be further enhanced.

It is preferable that both of the vertical wall portion 32 on the front side and the vertical wall portion 32 on the rear side come into contact along the inner surface shape (the slope shape) of the side wall portions 12 and 13 and are joined to the side wall portions 12 and 13 by the joining portion 76. Accordingly, at the time of side surface collision of the electric vehicle, cross section collapse of the inner cross member 3 due to an axis direction load less easily occurs and, in the inner cross member 3, the axis direction load is distributed and received by both of the vertical wall portion 32 on the front side and the vertical wall portion 32 on the rear side. Therefore, buckling of the inner cross member 3 can be suppressed.

The CAE analysis was performed in order to check proof stress by the structure of the inner cross member 3. As illustrated in FIG. 17, the inner cross members 3 set as a target of the CAE analysis are four types of inner cross members 3 having structures of types A to D.

The inner cross member 3 of the type A is formed in a hat cross-sectional shape and a ridgeline portion is not provided in the vertical wall portion 32. In the structure of the type A, the number of ridgeline portions is zero. In contrast, in the inner cross members 3 of the types B, C, and D, at least one or more ridgeline portions are formed in the vertical wall portion 32. Note that ridgeline portions provided in the vertical wall portions 32 of the inner cross members 3 of the types B, C, and D are formed over the entire length in the longitudinal direction of the inner cross member 3.

The inner cross member 3 of the type B has structure in which one ridgeline portion is provided in the pair of vertical wall portions 32. In the structure of the type B, the number of ridgeline portions is one. In the structure of the type B, one part of the vertical wall portion 32 on one side is bent to the outer side in a convex shape and the ridgeline portion 45 is provided in only the vertical wall portion 32 on one side.

The inner cross member 3 of the type C has structure in which four ridgeline portions are provided in the pair of vertical wall portions 32. In the structure of the type C, the number of ridgeline portions is four. In the structure of the type C, the ridgeline portions 41, 42, 43, and 44 are provided in only the vertical wall portion 32 on one side.

The inner cross member 3 of the type D has structure in which eight ridgeline portions are provided in the pair of vertical wall portions 32. In the structure of the type D, the number of ridgeline portions is eight. In the structure of the type D, the ridgeline portions 41, 42, 43, and 44 are provided in each of both the vertical wall portions 32. Note that the inner cross members 3 of the types A to D are manufactured by roll forming.

Then, for the structures of the types A to D, as illustrated in FIG. 18, the CAE analysis was performed in which one end on one side of the inner cross member 3 was fixed and a load in the longitudinal direction (the vehicle width direction) was applied to the other end to deform the inner cross member 3 by 3 mm. This load is an axis direction load acting in the longitudinal direction of the inner cross member 3.

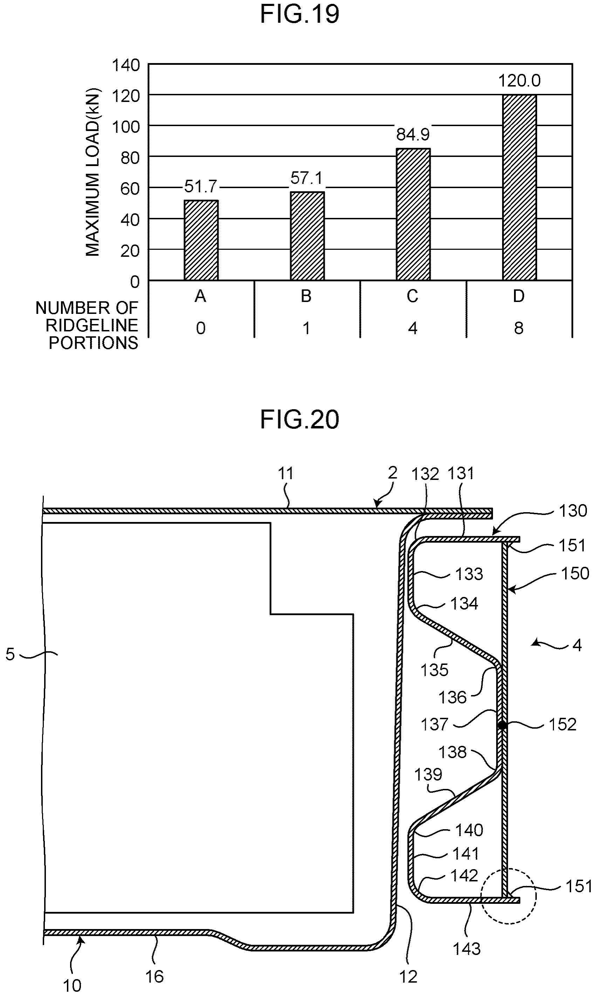

FIG. 19 is a diagram illustrating a correspondence relationship between a maximum load (proof stress) of a load-stroke curve obtained by the CAE analysis of the inner cross member and the number of ridgeline portions formed in the vertical wall portion of the inner cross member. Furthermore, Table 1 illustrates an example of a correspondence relationship between the maximum load of the load-stroke curve obtained by the CAE analysis and the number of ridgeline portions of the inner cross member 3 in the structures of the types A to D.

**Table 1**

| Type | A | B | C | D |
|---|---|---|---|---|
| Number of ridgeline portions | 0 | 1 | 4 | 8 |
| Weight (-) | 1.00 | 0.95 | 1.01 | 1.01 |
| Maximum load (kN) | 51.7 | 51.7 | 84.9 | 120.0 |

The maximum load of the load-stroke curve is a load (proof stress) with which the inner cross member 3 starts buckling deformation at the time of changing to plastic deformation through elastic deformation immediately after starting deformation and indicates proof stress against side surface collision. As the maximum load (proof stress) is higher, plastic deformation at the time of collision less easily occurs and collision characteristics are better.

As illustrated in FIG. 19, the maximum load (proof stress) of the inner cross member 3 increases substantially in proportion to the number of ridgeline portions. On the other hand, as illustrated in Table 1, in the structure of the type C and the structure of the type D, a weight increase with respect to the structure of the type A is also about 1% and it is possible to improve the rigidity of the inner cross member 3 while hardly increasing component weight from the structure of the hat cross-sectional shape of the type A. A numerical value of the weight illustrated in Table 1 is a numerical value representing a ratio based on the structure of type A.

In the inner cross member 3 of the type D, if the interval between the recesses 36 of the facing vertical wall portions 32 is narrowed to be smaller than the interval illustrated in FIG. 17, mating surfaces can be brought into contact with each other and further joined. By bringing the facing recesses 36 into contact each other and joining the facing recesses 36, the vertical wall portions 32 can be prevented from being opened and buckled when a load is applied to the inner cross member 3 and a higher maximum load (proof stress) can be obtained. The maximum load of the load-stroke curve obtained by the CAE analysis of the inner cross member 3 of the type D is improved by 4% by bringing the facing recesses 36 into contact with each other and joining the facing recesses 36. A period (a stroke amount) in which a high load (for example, 100 kN or more) can be maintained even after the load-stroke curve reaches the maximum load is improved to 2.3 times by bringing the recesses 36 of the facing vertical wall portions 32 into contact with each other and improved to 4.0 times by bringing the recesses of the facing vertical wall portions 32 into contact with each other and joining the recesses. As a method of joining the recesses 36, spot welding, arc welding, adhesion using an adhesive, and the like are possible.

The CAE analysis was performed on the method of connecting the inner cross member 3 and the side wall portions 12 and 13 of the tray 10 in order to check proof stress due to a difference in a connection method. The inner cross member 3 set as a target of the CAE analysis is the inner cross member 3 having the structure of type D illustrated in FIG. 17. As the difference in the connection method, a condition 1, a condition 2, a condition 3, and a condition 4 were provided.

The condition 1 is a connection method in which, as illustrated in FIG. 16, both of the vertical wall portion 32 on the front side and the vertical wall portion 32 on the rear side come into contact along the inner surface shapes of the side wall portions 12 and 13 (slope shapes in which the upper side of the side wall portions is inclined to the vehicle width direction outer side) and are joined to the side wall portions 12 and 13 by joining portions 76.

The condition 2 is a connection method in which both the vertical wall portion 32 on the front side and the vertical wall portion 32 on the rear side are in contact along the inner surface shapes of the side wall portions 12 and 13 but are not joined to the side wall portions 12 and 13. When the joining portion 76 is removed from the connection method of the condition 1, the connection method of the second condition is obtained.

The condition 3 is a connection method in which only the vertical wall portion 32 on the front side comes into contact along the inner surface shapes of the side wall portions 12 and 13 and is joined to the side wall portions 12 and 13. In this case, the end portion of the vertical wall portion 32 on the rear side is rectangular and is neither in contact with nor joined to the inner surface shapes of the side wall portions 12 and 13.

The condition 4 is a connection method in which the end portions of both of the vertical wall portion 32 on the front side and the vertical wall portion 32 on the rear side are rectangular and are neither in contact with nor joined to the inner surface shapes of the side wall portions 12 and 13.

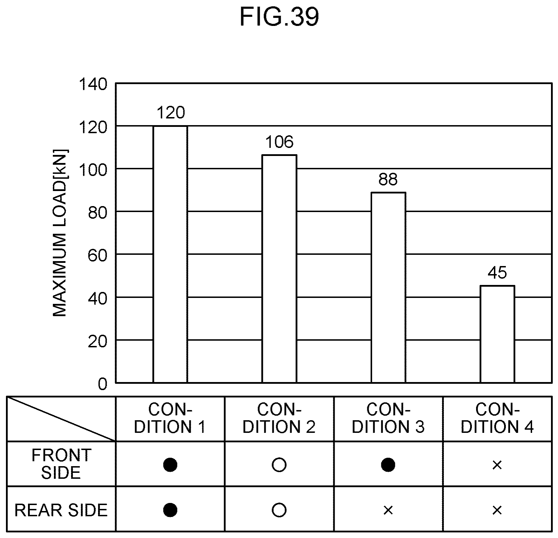

Then, as illustrated in FIG. 38, one end of one side of the inner cross member 3 was fixed (not illustrated), a relationship between the other end of the inner cross member 3, a rigid wall 300 in which the inner surface shapes of the side wall portions 12 and 13 of the tray 10 are simulated and the upper side of the side wall portions 12 and 13 is inclined 2 degrees to the vehicle width direction outer side was set as structure for the conditions 1 to 4, and the CAE analysis of deforming the inner cross member 3 by 3 mm by applying a load in the vehicle width direction to the rigid wall 300. In this CAE analysis, an axis direction load acts in the longitudinal direction of the inner cross member 3 via the rigid wall 300. The results of the CAE analysis are illustrated in FIG. 39.

As illustrated in FIG. 39, in the condition 1 in which both of the vertical wall portion 32 on the front side and the vertical wall portion 32 on the rear side are in contact along the inner surface shapes (the slope shapes) of the side wall portions 12 and 13 and are joined to the side wall portions 12 and 13 by the joining portions 76, the maximum load (proof stress) of the inner cross member 3 can be maximized. In the connection method of the condition 1, the maximum load is 120 kN.

When the joining portion 76 is removed from the condition 1, the maximum load decreases by 12% (the condition 2). In the connection method of the second condition, the maximum load is 106 kN. If the inner cross member 3 and the side wall portions 12 and 13 are brought into contact with each other and joined only to the vertical wall portion on the front side with respect to the condition 1, the maximum load decreases by 27% (the condition 3). In the connection method of the third condition, the maximum load is 88 kN. If the inner cross member 3 and the side wall portions 12 and 13 are not brought into contact and joined with respect to the condition 1, the maximum load decreases by 63% (the condition 4). In the connection method of the fourth condition, the maximum load is 45 kN. Note that black circles illustrated in FIG. 39 indicate that the inner cross member 3 is in contact along the inner surface shapes of the side wall portions 12 and 13 and is joined by the joining portion 76. White circles indicate that the inner cross member 3 is in contact along the inner surface shapes of the side wall portions 12 and 13 but is not joined. Cross marks indicate that the inner cross member 3 is neither in contact along the inner surface shapes of the side wall portions 12 and 13 nor joined.

### <Modifications of the side frame>

The structure of the side frame 4 is not limited to a structure having a figure-eight cross section in which two rectangles are overlapped in the vehicle height direction. Modifications of the side frame 4 are illustrated in FIG. 20 to FIG. 22.

As illustrated in FIG. 20, the side frame 4 in a first modification includes a first member 130 made of steel having a W-shaped cross section spreading to the outer side in the vehicle width direction and a second member 150 having a flat shape disposed on the vehicle width direction outer side of the first member 130. The first member 130 and the second member 150 are joined by welding.

The first member 130 includes an upper surface portion 131, a first bent portion 132, a side surface portion 133, a first ridgeline portion 134, an inclined surface portion 135, a second ridgeline portion 136, a side surface portion 137, a third ridgeline portion 138, an inclined surface portion 139, a fourth ridgeline portion 140, a side surface portion 141, a second bent section 142, and a lower surface portion 143.

The upper surface portion 131 is a portion forming a first cross section extending in the vehicle width direction. The first bent portion 132 is a bent portion connecting the upper surface portion 131 and the side surface portion 133. The side surface portion 133 is a wall portion extending in the vehicle height direction on the vehicle width direction inner side. The first ridgeline portion 134 is a boundary portion between the side surface portion 133 and the inclined surface portion 135. The inclined surface portion 135 is a wall portion formed between the side surface portion 133 and the side surface portion 137 and is inclined with respect to the vehicle height direction. The inclined surface portion 135 is a portion forming a second cross section extending in the vehicle width direction. The second ridgeline portion 136 is a boundary portion between the inclined surface portion 135 and the side surface portion 137. The side surface portion 137 extends in the vehicle height direction further on the vehicle width direction outer side than the side surface portion 133. The third ridgeline portion 138 is a boundary portion between the side surface portion 137 and the inclined surface portion 139. The inclined surface portion 139 is a wall portion formed between the side surface portion 137 and the side surface portion 141 and is inclined with respect to the vehicle height direction. The inclined surface portion 139 is a portion forming a third cross section extending in the vehicle width direction. The fourth ridgeline portion 140 is a boundary portion between the inclined surface portion 139 and the side surface portion 141. The side surface portion 141 is a wall portion extending in the vehicle height direction below the side surface portion 133. The side surface portion 141 is provided further on the vehicle width direction inner side than the side surface portion 137. The second bent section 142 is a bent portion connecting the side surface portion 141 and the lower surface portion 143. The lower surface portion 143 is a portion forming a fourth cross section extending in the vehicle width direction. As explained above, the cross section of the first member 130 includes four cross sections including the upper surface portion 131, the inclined surface portion 135, the inclined surface portion 139, and the lower surface portion 143.

The first member 130 having a W-shaped cross section is manufactured by press forming or roll forming. The side frame 4 has structure in which four ridgeline portions 134,136,138,140 and two cross sections including inclined surface portions 135 and 139 are added to a side frame (the side frame 400 illustrated in FIG. 25) having a simple quadrangular cross section. For that reason, the side frame 4 of the first modification has high load-bearing performance.

The first member 130 made of a steel sheet and the second member 150 having the flat shape are integrated by butt joining in a joining portion 151. The joining portion 151 is a joining portion formed by butting and joining the vehicle height direction both end portions of the second member 150 having the flat shape. In the side frame 4 in the first modification, in a portion surrounded by a broken line circle in FIG. 20, a joining portion 151 by laser welding is formed for the purpose of setting the radius of the corner portion zero. Accordingly, desired load-bearing performance in the side frame 4 can be obtained.

The first member 130 has a W-shaped cross section spreading to the vehicle width direction outer side. A part on the vehicle width direction outer side in the side frame 4 needs to have proof stress against a pressing force (a compression load) input from the outside at the time of side collision. Therefore, the second member 150 having the flat shape was disposed further on the vehicle width direction outer side of the side surface portion 137 of the first member 130 and the first member 130 and the second member 150 were joined by the joining portion 151. For that reason, in the side frame 4 of the first modification, the second member 150 forms a side surface facing the vehicle width direction outer side (the surface on the vehicle width direction outer side of the side frame 4).

Furthermore, the center in the vehicle height direction of the second member 150 may be joined to the side surface portion 137 of the first member 130 by a joining portion 152. The joining portion 152 is a joining portion formed by spot welding or laser welding. Accordingly, the load-bearing performance can be improved by approximately 10%. A load bearing capacity increases because, by being joined, a maximum compression stress generation portion at the time of bending deformation becomes a double sheet joining portion formed by combining two steel sheets. The first member 130 and the second member 150 may not be joined at the center in the vehicle height direction. That is, the joining portion 152 may not be always provided.

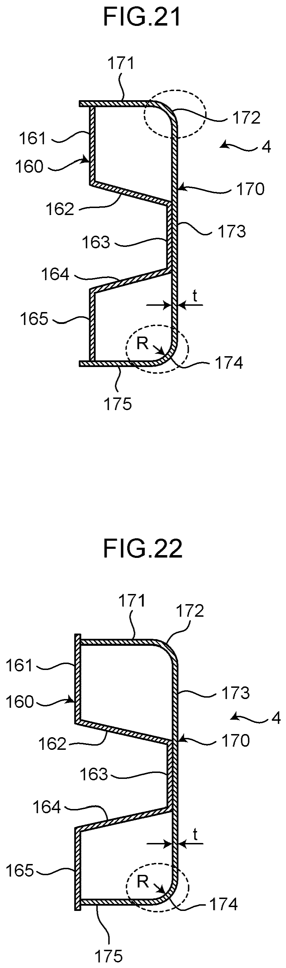

As illustrated in FIG. 21, the side frame 4 in the second modification includes a first member 160 made of a steel sheet having a hat cross-sectional shape spreading toward the inner side in the vehicle width direction and a second member 170 having a U-shaped cross section disposed to cover the vehicle width direction outside of the first member 160.

The first member 160 having the hat cross-sectional shape includes a side surface portion 161, an inclined surface portion 162, a side surface portion 163, an inclined surface portion 164, and a side surface portion 165.

The side surface portion 161 on the upper side is a portion forming a side surface on the vehicle width direction inner side of the side frame 4 and extends in the vehicle height direction. The inclined surface portion 162 on the upper side is a portion that is inclined with respect to the vehicle height direction and forms a first cross section extending in the vehicle width direction. The side surface portion 163 in the center is formed further on the vehicle width direction outer side than the side surface portions 161 and 165. The inclined surface portion 164 on the lower side is a portion that is inclined with respect to the vehicle height direction and forms a second cross section extending in the vehicle width direction. The side surface portion 165 on the lower side is a portion forming a side surface on the vehicle width direction inner side of the side frame 4 and extends in the vehicle height direction below the side surface portion 161.

The second member 170 having the U-shaped cross section includes an upper surface portion 171, a punch shoulder R portion 172 on the upper side, a side surface portion 173, a punch shoulder R portion 174 on the lower side, and a lower surface portion 175.

The upper surface portion 171 is a portion forming a third cross section extending in the vehicle width direction. The punch shoulder R portion 172 is a bent portion connecting the upper surface portion 171 and the side surface portion 173. The side surface portion 173 is disposed further on the vehicle width direction outer side than the first member 160 and extends in the vehicle height direction. The side surface portion 173 is a portion forming a side surface on the vehicle width direction outer side of the side frame 4. The punch shoulder R portion 174 on the lower side is a bent portion connecting the side surface portion 173 and the lower surface portion 175. The lower surface portion 175 is a portion forming a fourth cross section extending in the vehicle width direction.

In the side frame 4 in the second modification, a relationship between a curvature radius R of the punch shoulder R portions 172 and 174 of the second member 170 and a plate thickness t of the second member 170 preferably satisfies R/t ≤ 3.0.

The vehicle height direction both end portions of the first member 160 are joined to the second member 170 by welding or the like. The upper end of the side surface portion 161 on the upper side is joined to the lower surface of the upper surface portion 171. The lower end of the side surface portion 165 on the lower side is joined to the upper surface of the lower surface portion 175. As this joining method, spot welding, arc welding, adhesion by an adhesive, and the like are possible. The center in the vehicle height direction of the second member 170 may be joined to the side surface portion 163 of the first member 160 by a joining portion formed by spot welding or laser welding.

A method of joining the first member 160 and the second member 170 is not limited to the example illustrated in FIG. 21. For example, the first member 160 and the second member 170 can be joined as illustrated in FIG. 22. In an example illustrated in FIG. 22, the end portion on the vehicle width direction inner side of the upper surface portion 171 is joined to the surface on the vehicle width direction outer side of the side surface portion 161 and the end portion on the vehicle width direction inner side of the lower surface portion 175 is joined to the surface on the vehicle width direction outer side of the side surface portion 165. As this joining method as well, spot welding, arc welding, adhesion by an adhesive, and the like are possible.

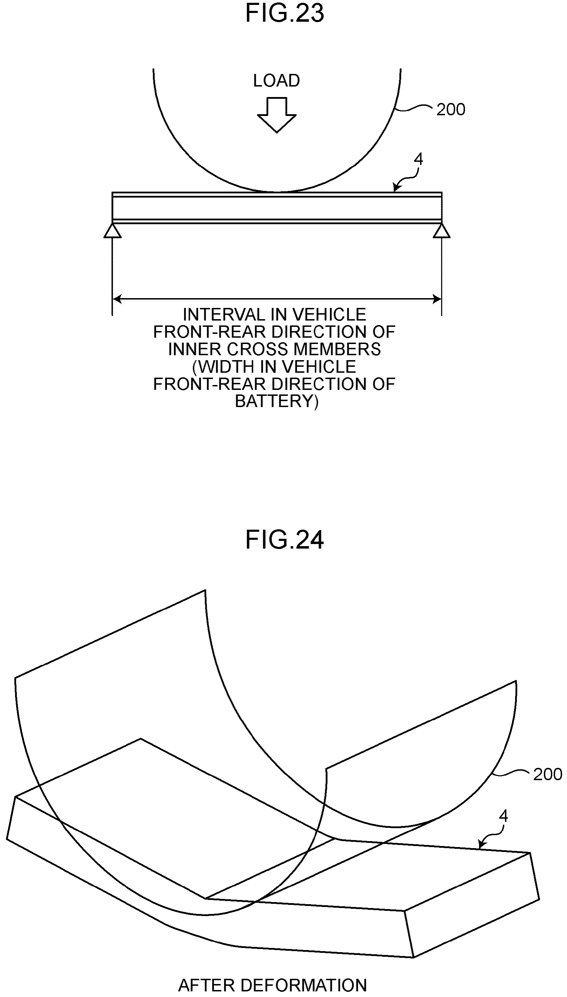

The CAE analysis was performed in order to check the load-bearing performance due to the structure of the side frame 4. In this CAE analysis, as illustrated in FIG. 23, a load simulating side surface collision by the pole 200 was applied from both support points to the center in a state in which both ends of the side frame 4 were supported. An interval between two support points is an interval in the vehicle front-rear direction in which the inner cross member 3 is disposed. Alternatively, the interval between the two support points is the width in the vehicle front-rear direction of the battery. Then, as illustrated in FIG. 24, the CAE analysis for deform the side frame 4 by 15 mm by causing the poles 200 to project sideways was performed. As illustrated in FIG. 25, the side frame 400 having the simple quadrangular cross section was used as a side frame in a comparative example.

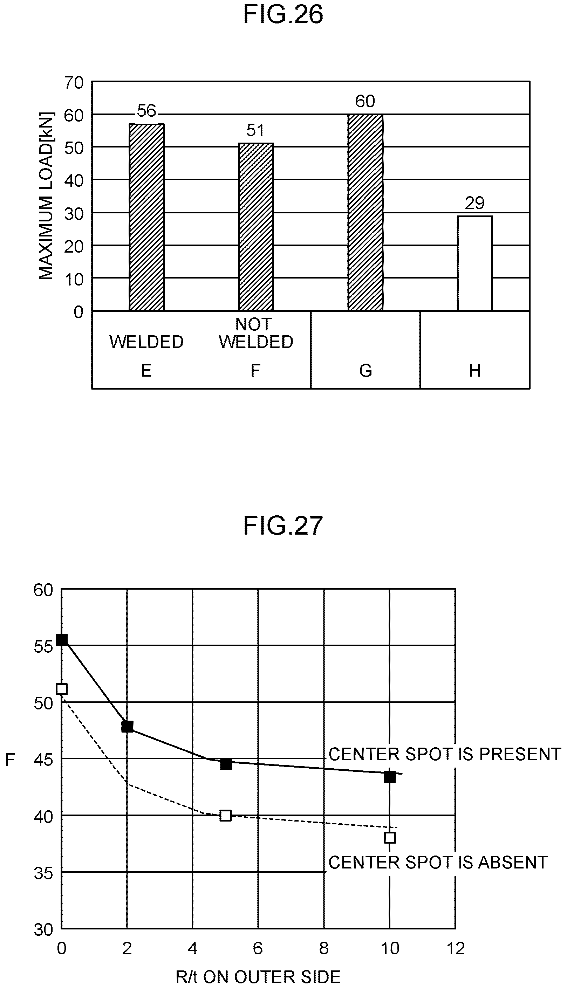

FIG. 26 is a diagram illustrating a maximum load (proof stress) of a load-stroke curve obtained by the CAE analysis. FIG. 26 illustrates a result obtained by verifying, with the CAE analysis, load-bearing performance against a load acting in the vehicle width direction at the time of side surface collision of the side frames 4. The side frames set as targets of the CAE analysis are four types of side frames having structures of types E to H.

As illustrated in FIG. 20, the side frame of the type E has structure in the case in which the side frame 4 in the first modification includes the joining portion 152. As illustrated in FIG. 20, the side frame of the type F has structure in the case in which the joining portion 152 is absent in the side frame 4 in the first modification. As illustrated in FIG. 21, the side frame of the type G is the side frame 4 in the second modification. As illustrated in FIG. 25, the side frame of type E is the side frame 400 having the simple quadrangular cross section.

As illustrated in FIG. 26, it was confirmed that the structures of the types E, F, and G showed a maximum load (proof stress) higher by 42% to 107% than that of the structure of the type H and had high load-bearing performance.

FIG. 27 is a diagram illustrating a relationship between the load-bearing performance of the side frame at the time of side surface collision obtained by the CAE analysis illustrated in FIG. 23 and FIG. 24, the curvature radius of the punch shoulder R portion of the second member having the U-shaped cross section, and the plate thickness of the second member.

In a relationship between the curvature radius R of the punch shoulder R portions 172 and 174 of the second member 170 and the plate thickness t of the second member 170, as illustrated in FIG. 27, as R/t decreases, the load-bearing performance against a load acting in the vehicle width direction at the time of side surface collision is improved. When R/t is 0, the load-bearing performance can be improved most. Note that, about the structure of the side frame 4 in the first modification illustrated in FIG. 20, a structure in which the first member 130 and the second member 150 are butted and joined (a structure including the joining portion 151) is one of forms in the case in which R/t illustrated in FIG. 27 is 0. Since the side frame 4 in the first modification has R/t of 0, the side frame 4 has high load-bearing performance.

A reason why the load-bearing performance is improved as R/t decreases in the relationship between the curvature radius R and the plate thickness t can be described as follows.

In a pole side surface collision mode, when a load is input to the side frame 4, when being considered in a cross section perpendicular to the vehicle front-rear direction passing through a pole center portion, a side surface portion on the vehicle width direction outer side of the side frame 4 (the side surface portion 173 of the second member 170 having the U-shaped cross section) is in a bending deformed state in which the side surface portion is on a compression side. At this time, when the curvature radius R (that is, R/t) of the punch shoulder R portions 172 and 174 of the second member 170 is large, buckling deformation in which the upper surface portion 171 and the lower surface portion 175 of the second member 170 having the U-shaped cross section respectively collapse to the outer side to spread in the vehicle height direction easily occurs at the time of side surface collision. In contrast, when the curvature radius R (that is, R/t) of the punch shoulder R portions 172 and 174 of the second member 170 having the U-shaped cross section is reduced, this buckling deformation less easily occurs. For that reason, proof stress against a collision load is improved. In particular, when R/t ≤ 3.0, the maximum load (proof stress) at the time of side surface collision increases, which is preferable as structure.

### <Modification of the battery case>

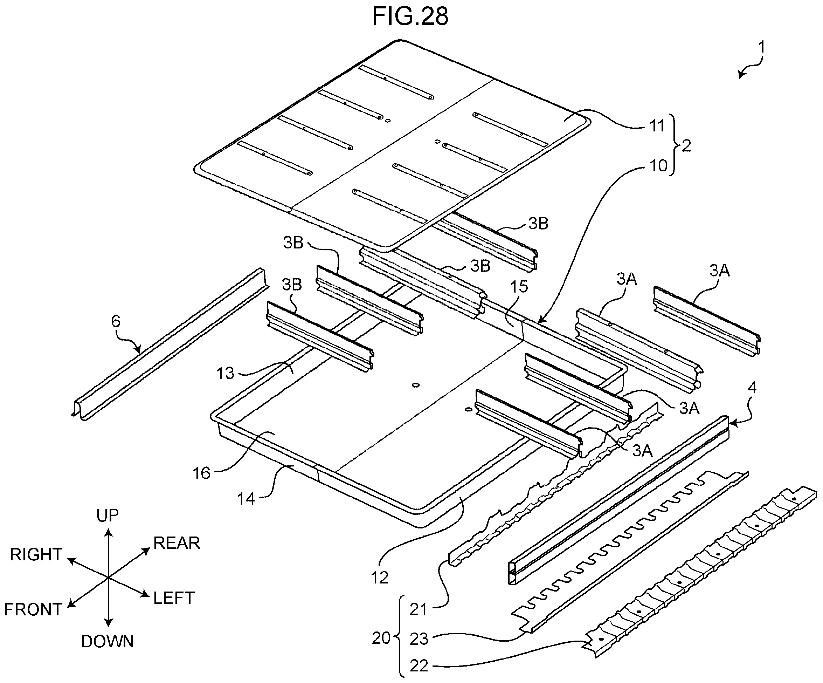

As illustrated in FIG. 28, as a modification of the battery case 1, a center frame 6 can be disposed on the inside of the main body 2. In the tray 10, the center frame 6 is disposed at the center in the vehicle width direction, extends in the vehicle front-rear direction, and extends over the front wall portion 14 and the rear wall portion 15. The center frame 6 can divide the inside of the tray 10 into two in the vehicle width direction.

One end in the vehicle width direction of the inner cross member 3 is attached to the side wall portion 12 or the side wall portion 13 and the other end in the vehicle width direction thereof is attached to the center frame 6. The inner cross member 3 includes an inner cross member 3A on the left side provided to extend over the left side wall portion 12 and the center frame 6 and an inner cross member 3B on the right side provided to extend over the right-side wall portion 13 and the center frame 6. An attachment structure for the inner cross member 3 and the center frame 6 may be a fixing method in which a fixing member such as a bracket is used or a joining method by welding or adhesion. In this modification, by providing the center frame 6, the buckling wave length in the vehicle width direction of the inner cross member 3 can be reduced and the maximum load (proof stress) at the time of side surface collision can be increased.

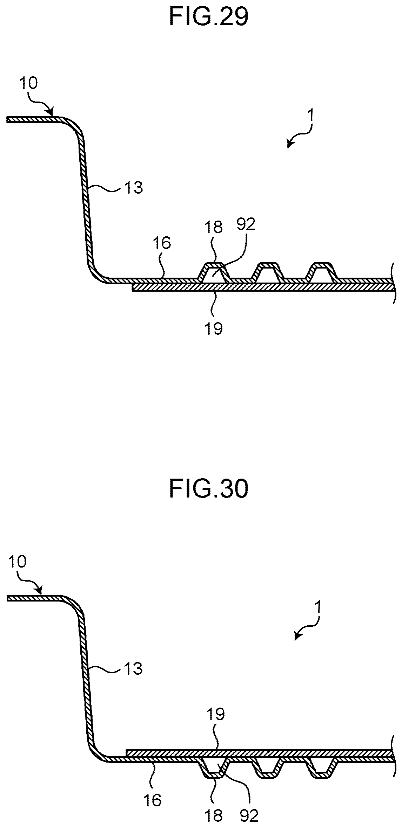

As illustrated in FIG. 29, uneven portions 18 having an uneven shape may be formed in a mounting portion of battery cells in the bottom 16 of the tray 10 of the battery case 1. The tray 10 was formed into a deep drawn molded product made of steel and an uneven shape to be a pipe shape was formed on the bottom 16 at the same time by bulging. The uneven portions 18 can improve surface rigidity of the tray 10, suppress oil scanning of the bottom 16, and improve rigidity of the tray 10.

Further, as illustrated in FIG. 29, the bottom 16 on which the uneven portions 18 are formed may be covered with a flat panel 19 or the like and sealed to form a flow path 92 through which a coolant for cooling the battery cells flows. The battery case 1 includes the flat panel 19 for confining the coolant in the flow path 92. The flat panel 19 is joined to the bottom 16 by laser welding, brazing, or the like. Then, it is possible to configure a form of the battery case 1 in which an uneven shape to be a cooling pipe is imparted to the bottom 16 of the tray 10.

The flow path 92 can be formed in a protruding shape in the inward direction of the tray 10 and can be formed in structure to be sealed by the flat panel 19 from the lower side of the bottom surface of the bottom 16. Alternatively, as illustrated in FIG. 30, the uneven portions 18 may be formed in a convex shape downward in the vehicle height direction from the bottom 16. In this case, the flow path 92 in which the coolant passes may be formed a protruding shape to the outward direction of the tray 10 and may be formed in a seal structure in which the flat panel 19 is set on the inside of the tray 10.

### <Interval in the vehicle front-rear direction in which inner cross member is disposed>

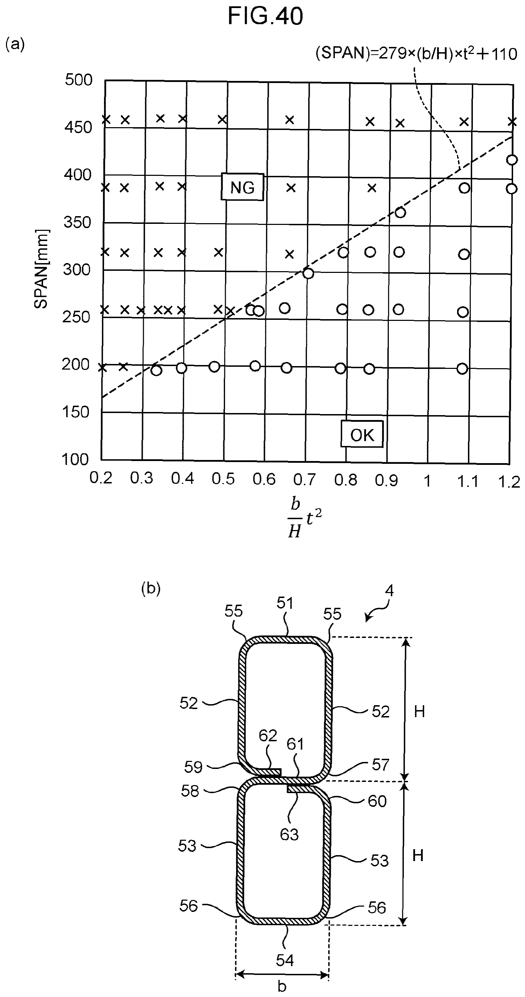

FIG. 40(a) illustrates a diagram in which, in the CAE analysis illustrated in FIG. 23, at the time when the interval (the width in the vehicle front-rear direction of the battery, simply referred to as span) in the vehicle front-rear direction in which the inner cross member 3 is disposed, a dimension ratio (b/H) and the plate thickness t of the side frame 4 having the cross-sectional shape illustrated in FIG. 8 are changed, and a load simulating side surface collision by the pole 200 is applied from both support points to the center, a load (proof stress) at a reference punch intrusion amount is evaluated as an evaluation load. In FIGS. 40(a) and(b), b denotes width and H denotes an interval between the upper surface portion 51 and the intermediate surface portion 61 and an interval between the intermediate surface portion 61 and the lower surface portion 54. Then, suitable design ranges of the span, the dimension ratio (b/H), and the plate thickness t of the inner cross member 3 were determined. As the dimension ratio (b/H) is smaller (the bending rigidity of the side frame 4 is smaller) and the span is longer, the side frame 4 is flexurally deformed by side surface collision by the poles 200. Therefore, the evaluation load decreases.

In order to obtain a desired evaluation load (for example, 9 kN/kg or more), it is preferable to properly set the dimension ratio (b/H) and the plate thickness t of the side frame 4 with respect to the interval (the span) in the vehicle front-rear direction in which the inner cross member 3 is disposed. For example, in the example illustrated in FIG. 40(a), when the yield strength of 850 MPa is used, the dimension ratio (b/H) of the side frames 4 is preferably set to b/H<2.3 and a relationship of (the span of the inner cross member 3) ≤ 279× (b/H)×t²+110 is preferably satisfied.

### [Example]

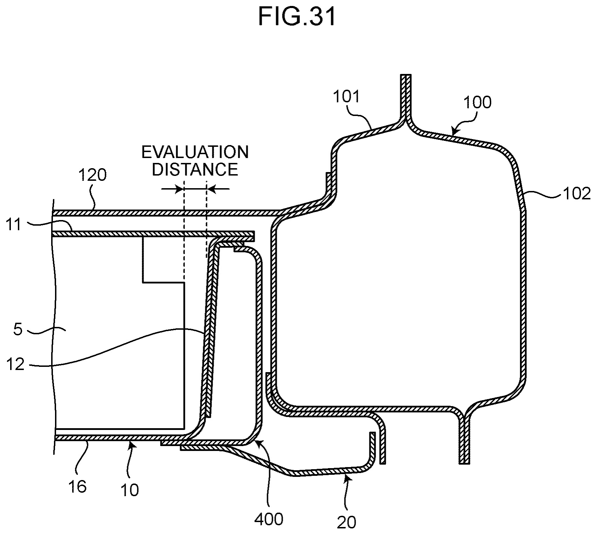

In order to check the effect of the battery case structure in the present invention, the battery case, the floor cross member, and the side sill were modeled, and the CAE analysis at the time when the pole collided with the side surface of the battery case was performed. A model used in the CAE analysis is a half model symmetrical at the center in the vehicle width direction. For this half model, the center in the vehicle width direction was fixed with a rigid wall, the rigid wall was completely restrained, and the pole was caused to collide with the side surface of the side sill. The radius of the pole is 127 mm and initial speed is 30.9 km/h. The pole was caused to collide with the side sill 100 in the vehicle width direction at a position where the center position of the pole overlaps the center position in the vehicle front and rear direction of the floor cross member 121. The center position in the vehicle front-rear direction is, for example, a cross section taken along a plane orthogonal to the vehicle front-rear direction at a position of 785 mm rearward from the front surface of the front wall portion 14 of the battery case 1. Then, an evaluation distance was evaluated when a pole penetration amount was 102 mm after the pole came into contact with the side surface of the side sill. As illustrated in FIG. 31, the evaluation distance is a minimum distance between the side wall portions 12 and 13 and the battery 5 on the inside of the tray 10 at the time of side surface collision. The longer evaluation distance indicates that collision characteristics are more satisfactory. Note that the side frame 400 illustrated in FIG. 31 is a side frame in a comparative example 1.

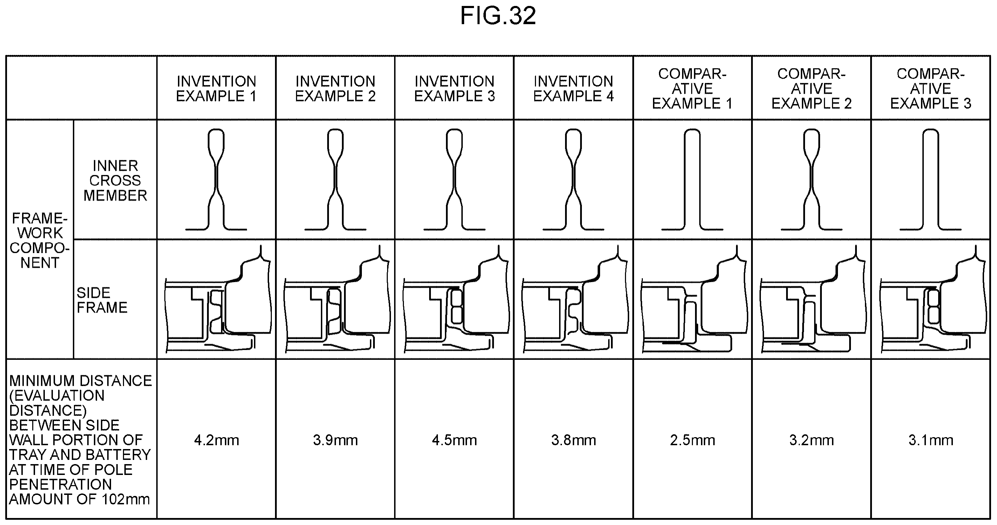

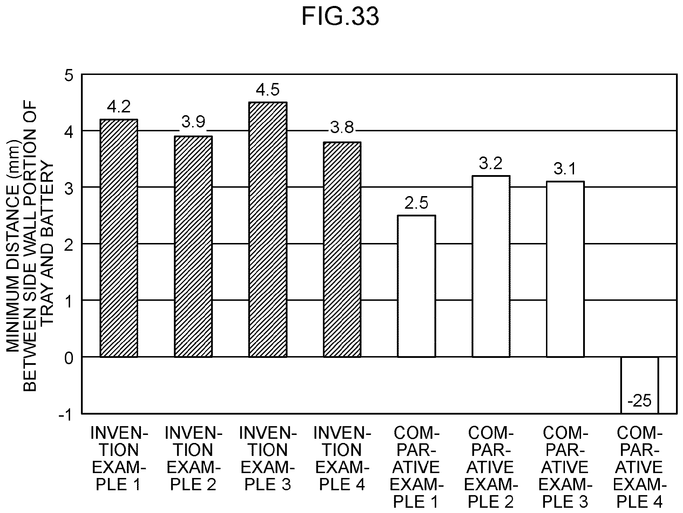

FIG. 32 is a diagram illustrating an invention example set as a target of the CAE analysis and a comparative example. FIG. 33 is a graph illustrating CAE analysis results in the invention example and the comparative example. Note that, in FIG. 32, a combination of an inner cross member and a side frame is illustrated as a framework structure.

As illustrated in FIG. 32, the framework structure of an invention example 1 is a structure in which an inner cross member having eight ridgeline portions in vertical wall portions and a side frame including a structure made of a steel sheet having a W-shaped cross section spreading to the outer side in the vehicle width direction are combined. In the inner cross member in the invention example 1, a recess is formed at a center position in the vehicle height direction in each of a pair of vertical wall portions and eight ridgeline portions in total are provided. The inner cross member in the invention example 1 has the same structure as the inner cross member 3 illustrated in FIG. 4. The side frame in the invention example 1 has the same structure as the side frame 4 illustrated in FIG. 20. In a result of the CAE analysis in the invention example 1, as illustrated in FIG. 32 and FIG. 33, the minimum distance (the evaluation distance) between the side wall portion of the tray and the battery at the time when an intrusion amount of the pole reached 102 mm was 4.2 mm.

As illustrated in FIG. 32, a framework structure in an invention example 2 is a structure in which an inner cross member having eight ridgeline portions in vertical wall portions and a side frame including a structure made of steel sheet having a hat cross-sectional shape spreading toward the inner side in the vehicle width direction are combined. The inner cross member in the invention example 2 has the same structure as the inner cross member in the invention example 1. The side frame in the invention example 2 has the same structure as the side frame 4 illustrated in FIG. 21. The curvature radius of the punch shoulder R portions 172 and 174 of the second member 170 is R=2.4 mm, the plate thickness is t=1.2 mm, and R/t=2.0 (≤ 3.0) is satisfied. In a result of the CAE analysis in the invention example 2, as illustrated in FIG. 32 and FIG. 33, the minimum distance (the evaluation distance) between the side wall portion of the tray and the battery at the time when the penetration amount of the pole reached 102 mm was 3.9 mm.

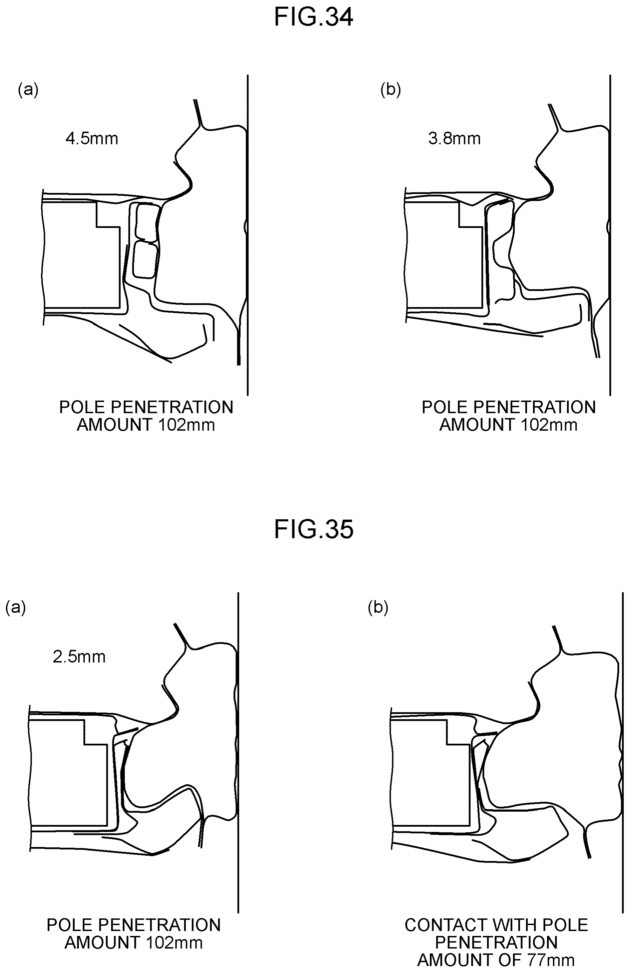

As illustrated in FIG. 32, a framework structure of in an invention example 3 is a structure in which an inner cross member having eight ridgeline portions in vertical wall portions and a side frame including a structure made of a steel sheet having a figure-eight cross section in which two rectangles are overlapped in the vehicle height direction are combined. The inner cross member in the invention example 3 has the same structure as the inner cross member in the invention example 1. The side frame of the third invention has the same structure as the side frame 4 illustrated in FIG. 8. In a result of the CAE analysis in the invention example 3, as illustrated in FIG. 32 and FIG. 33, the minimum distance (the evaluation distance) between the side wall portion of the tray and the battery at the time when the penetration amount of the pole reached 102 mm was 4.5 mm. A deformed state at this time is as illustrated in FIG. 34(a). In the invention example 3, when the penetration amount of the pole reaches 102 mm, a gap remains between the side wall portion of the tray and the vehicle width direction end portion of the battery and the side wall and the battery are not in contact.

As illustrated in FIG. 32, the framework structure of an invention example 4 is a structure in which an inner cross member having eight ridgeline portions in vertical wall portions and a side frame including a structure made of a steel sheet having a W-shaped cross section spreading to the outer side in a vehicle width direction. The inner cross member in the invention example 4 has the same structure as the inner cross member in the invention example 1. In the side frame in the invention example 4, the side frame in the invention example 1 (the side frame 4 illustrated in FIG. 20) is reversed in the vehicle width direction and two protrusions of the W-shaped cross section are disposed toward the vehicle width direction outer side. In a result of CAE analysis in the invention example 4, as illustrated in FIG. 32 and FIG. 33, the minimum distance (the evaluation distance) between the side wall portion of the tray and the battery at the time when the penetration amount of the pole reached 102 mm was 3.8 mm. A deformed state at this time is as illustrated in FIG. 34(b). In the invention example 4, when the intrusion amount of the pole reaches 102 mm, a gap remains between the side wall portion of the tray and the vehicle width direction end portion of the battery, and the side wall and the battery are not in contact with each other.

In all of the inner cross members in the invention examples 1 to 4, the flange section is joined to the bottom of the tray of the battery case by spot welding and the vehicle width direction end portion of the inner cross member is attached to the side wall portion of the tray via the bracket in a state in which the vehicle width direction end portion is in contact with and along the side wall portion of the tray. In all of the side frames in the invention examples 1 to 4, an interval in the vehicle height direction between the cross sections extending in the vehicle width direction is set to half or less of the depth of the tray.

As illustrated in FIG. 32, a framework structure in the comparative example 1 is a structure in which an inner cross member having a hat cross-sectional shape in which a ridgeline portion is not provided in a vertical wall portion and a side frame having a simple quadrangular cross section are combined. The inner cross member in the comparative example 1 has the same structure as the structure of the inner cross member 3 of the type A illustrated in FIG. 17. In the side frame in the comparative example 1, unlike the side frame in the invention example 1, a ridgeline portion along the vehicle front-rear direction is not formed in the vertical wall portions. The side frame in the comparative example 1 has the same structure as the side frame 400 illustrated in FIG. 25. In a result of the CAE analysis in the comparative example 1, as illustrated in FIG. 32 and FIG. 33, the minimum distance (the evaluation distance) between the side wall portion of the tray and the battery at the time when the penetration amount of the pole reached 102 mm was 2.5 mm. A deformed state at this time is as illustrated in FIG. 35(a). In the comparative example 1, when the intrusion amount of the poles reaches 102 mm, a gap remains between the side wall portion of the tray and the battery and the side wall is not in contact with the vehicle width direction end portion of the battery. When the comparative example 1 is compared with the invention example 3, the side frame is greatly deformed and crushed and the inner member and the fixing member of the side sill are greatly distorted.

As illustrated in FIG. 32, a framework structure of a comparative example 2 is a structure in which an inner cross member having eight ridgeline portions in the vertical wall portions and a side frame having a simple quadrangular cross section are combined. The inner cross member in the comparative example 2 has the same structure as the structure of the inner cross member in the invention example 1. The side frame in the comparative example 2 has the same structure as the structure of the side frame in the comparative example 1. In a result of the CAE analysis in the comparative example 2, as illustrated in FIG. 32 and FIG. 33, the minimum distance between the side wall portion of the tray and the battery at the time when the penetration amount of the poles reached 102 mm was 3.2 mm.

As illustrated in FIG. 32, a framework structure in a comparative example 3 is a structure in which an inner cross member having a hat cross-sectional shape in which a ridgeline portion is not provided in a vertical wall portion and a side frame including a steel sheet structure having a figure-eight cross section in which two rectangles are overlapped in the vehicle height direction are combined. The inner cross member in the comparative example 3 has the same structure as the structure of the inner cross member in the invention example 1. The side frame in the comparative example 3 has the same structure as the structure of the side frame in the invention example 3. In a result of the CAE analysis in the comparative example 3, as illustrated in FIG. 32 and FIG. 33, the minimum distance (the evaluation distance) between the side wall portion of the tray and the battery at the time when the penetration amount of the poles reached 102 mm was 3.1 mm.

As in the comparative example 1, a framework structure in a comparative example 4 is a structure in which an inner cross member having a hat cross-sectional shape in which a ridgeline portion is not provided in a vertical wall portion and a side frame having a simple quadrangular cross section are combined. Unlike in the comparative example 1, in a comparative example 4, the vehicle width direction end portion of the inner cross member is not attached to the side wall portion of the tray. In contrast, in both of the invention examples 1 to 4 and the comparative examples 1 to 3, the vehicle width direction end portion of the inner cross member is attached to the side wall via the bracket in a state in which the vehicle width direction end portion of the inner cross member is in contact along the side wall portion of the tray. In a result of the CAE analysis in the comparative example 4, as illustrated in FIG. 33, the minimum distance (the evaluation distance) between the side wall portion of the tray and the battery at the time when the penetration amount of the poles reached 102 mm was -25 mm. In a deformed state in the comparative example 4, as illustrated in FIG. 35(b), the side wall portion of the tray was in contact with the vehicle width direction end portion of the battery when the intrusion amount of the poles reached 77 mm. For that reason, the evaluation distance in the comparative example 4 is -25 mm (=77 mm-102 mm).

In all of the inner cross members in the comparative examples 1 to 4, the flange section is joined to the bottom of the tray of the battery case by spot welding. In the comparative examples 1 to 3, the vehicle width direction end portion of the inner cross member is attached to the side wall portion of the tray via the bracket. On the other hand, in only the inner cross member in the comparative example 4, the vehicle width direction end portion is not attached to the side wall portion of the tray.

As illustrated in FIG. 33, in the invention examples 1 to 4, the evaluation distance is 1.4 mm to 2.0 mm longer than that in the comparative example 1 and the collision characteristics are improved. When the comparative example 1 and the comparative example 2 are compared, the evaluation distance was improved by 0.7 mm by changing to a cross-sectional form to a cross-sectional form in which ridgeline portions extending in the vehicle width direction are provided on the vertical wall portions on both the sides of the inner cross member. When the comparative example 1 and the comparative example 3 are compared, the evaluation distance was improved by 0.6 mm by providing a plurality of ridgeline portions (bent portions) in the vehicle front-rear direction of the side frame and a plurality of cross sections extending in the vehicle width direction. The framework structure in the invention example 3 is a combination of the inner cross member in the comparative example 2 and the side frame in the comparative example 3. With the CAE analysis result in the invention example 3, because of an synergistic effect of the above, a collision characteristic improvement margin of 2.0 mm (=4.5 mm-2.5 mm) larger than a total improvement margin of 1.3 mm (=0.7 mm+0.6 mm) in the comparative example 2 and the comparative example 3 was obtained.

From the above, it has been demonstrated that it is possible to improve the collision performance of the battery case while suppressing an increase in weight by combining the cross-sectional shapes of the inner cross member and the side frame with appropriate one by the invention examples.

### Industrial Applicability

According to the present invention, it is possible to achieve a structure of a battery case having rigidity and strength higher than those in the related art without requiring a significant increase in weight and manufacturing cost.

### Reference Signs List

- 1: BATTERY CASE
- 2: MAIN BODY
- 3: INNER CROSS MEMBER
- 4: SIDE FRAME
- 10: TRAY
- 11: COVER
- 12, 13: SIDE WALL PORTION
- 14: FRONT WALL PORTION
- 15: REAR WALL PORTION
- 20: FIXING MEMBER
- 21: FIRST FIXING MEMBER
- 22: SECOND FIXING MEMBER
- 23: THIRD FIXING MEMBER
- 31: TOP PLATE SECTION
- 32: VERTICAL WALL PORTION
- 33: FLANGE SECTION
- 34: UPPER BENT SECTION
- 35: LOWER BENT SECTION
- 36: RECESS
- 41, 42, 43, 44, 45, 46, 47: RIDGELINE PORTION
- 172, 174: PUNCH SHOULDER R PORTION

## Claims

1. A battery case that is mounted below a floor of a vehicle body and houses a battery, the battery case comprising:
a main body including a bottomed frame body including a pair of side wall portions facing each other in a vehicle width direction in a state of being mounted on the vehicle body;
an inner cross member extending in the vehicle width direction to extend over the pair of side wall portions in the main body to reinforce the main body; and
a side frame that extends in a vehicle front-rear direction outside the main body and is joined to outer surfaces of the pair of side wall portions to reinforce the main body, wherein
the inner cross member includes:
a top plate section;
a pair of vertical wall portions formed in series from the top plate section via an upper bent section; and
a pair of flange sections formed in series from the vertical wall portion via a lower bent section,
the pair of vertical wall portions includes:
a front side vertical wall portion formed continuously from the top plate section to a front side in the vehicle front-rear direction; and
a rear side vertical wall portion that faces the front side vertical wall portion in the vehicle front-rear direction and is formed continuously from the top plate section to a rear side in the vehicle front-rear direction, and
a ridgeline portion extending in the vehicle width direction is formed in at least one of the front side vertical wall portion and the rear side vertical wall portion.

2. The battery case according to claim 1, wherein the ridgeline portion is formed over an entire length in a longitudinal direction of the inner cross member.

3. The battery case according to claim 2, wherein
in at least one of the front side vertical wall portion and the rear side vertical wall portion, a recess recessed toward another vertical wall facing the one vertical wall portion, and
the recess is formed to include a plurality of the ridgeline portions and extends in the vehicle width direction.

4. The battery case according to claim 3, wherein
the recess includes:
a front side recess formed in the front side vertical wall portion;
a rear side recess formed in the rear side vertical wall portion, and
the front side recess and the rear side recess are joined in portions facing each other in the vehicle front-rear direction.

5. The battery case according to claim 4, wherein the flange section is joined to a bottom of the main body.

6. The battery case according to claim 5, wherein the inner cross member is joined in a state in which an end portion in the vehicle width direction is in contact along the side wall portion.

7. The battery case according to claim 6, wherein, in the inner cross member, both of the front side vertical wall portion and the rear side vertical wall portion are connected to the side wall portion.

8. The battery case according to claim 7, comprising
a center frame that extends in the vehicle front-rear direction in the main body and is provided to extend over a front wall portion and a rear wall portion of the main body and divides an inside of the main body in the vehicle width direction, wherein
one end portion in the vehicle width direction of the inner cross member is joined to the side wall portion and another end portion in the vehicle width direction of the inner cross member is joined to the center frame.

9. The battery case according to any one of claims 1 to 8, wherein
the side frame is a structure made of steel in which a steel sheet is mountain folded and/or valley folded and has a plurality of cross sections extending in the vehicle width direction, and
a mountain folded portion and/or a valley folded portion in the side frame forms a plurality of bent portions extending in the vehicle front-rear direction.

10. The battery case according to claim 9, wherein
the side frame includes a side surface portion provided continuously to the cross section via the bent portion, and
the side surface portion is a portion joined to an outer surface of the side wall portion.

11. The battery case according to claim 9, wherein an interval between the cross sections in a vehicle height direction is equal to or smaller than half of a depth of a bottom of the main body.

12. The battery case according to claim 9, wherein
the side frame includes:
a first member having a W-shaped cross section spreading toward an outer side or an inner side in the vehicle width direction; and
a second member having a flat shape joined to the outer side or the inner side in the vehicle width direction of the first member, and
a joining portion of the first member and the second member is joined in a butted state.

13. The battery case according to claim 9, wherein
the side frame includes:
a first member having a hat cross-sectional shape spreading toward an inside in the vehicle width direction; and
a second member having a U-shaped cross section joined to an outer side in the vehicle width direction of the first member, and
a relationship between a curvature radius R of a punch shoulder R portion of the second member and a plate thickness t of the second member satisfies R/t ≤ 3.0.

14. The battery case according to claim 7, wherein the side frame is configured by a structure having a figure eight-shaped cross section in which two rectangles are overlapped in a vehicle height direction.

15. The battery case according to claim 9, wherein an uneven shape is formed at a mounting portion of the battery in a bottom of the main body.

16. The battery case according to claim 15, comprising
a plate member that closes an opening in a vehicle height direction of the uneven shape, wherein
a space segmented by the uneven shape and the plate member is used as a flow path for a coolant for cooling the battery.

17. The battery case according to claim 9, wherein
the inner cross member is made of a steel sheet having a yield strength of 500 MPa class or more, and
the side frame is made of a steel sheet having tensile strength of 1180 MPa class or more.
